(19) Europäisches Patentamt
European Patent Office
Office européen des brevets

(11) **EP 3 974 073 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**20.05.2026   Patentblatt 2026/21**

(45) Hinweis auf die Patenterteilung:
**19.07.2023   Patentblatt 2023/29**

(21) Anmeldenummer: **20198745.0**

(22) Anmeldetag: **28.09.2020**

(51) Internationale Patentklassifikation (IPC):
***B21B 37/16*** *(2006.01)*

(52) Gemeinsame Patentklassifikation (CPC):
**B21B 37/165;** B21B 37/46; B21B 37/54; B21B 37/62; B21B 2015/0057; B21B 2015/0064; B21B 2261/04; B21B 2271/02; B21B 2273/20; B21B 2275/04; B21B 2275/10; B21B 2275/12

(54) **WALZEN UNTER BERÜCKSICHTIGUNG VON FREQUENZVERHALTEN**

ROLLING TAKING INTO ACCOUNT FREQUENCY BEHAVIOUR

LAMINAGE EN FONCTION DE LA RÉPONSE DE FRÉQUENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.03.2022   Patentblatt 2022/13**

(73) Patentinhaber: **Primetals Technologies Germany GmbH**
**91058 Erlangen (DE)**

(72) Erfinder:
• **Dressler, Matthias**
**91052 Erlangen (DE)**
• **Kotzian, Daniel**
**91301 Forchheim (DE)**

(74) Vertreter: **Metals@Linz**
**Primetals Technologies Austria GmbH**
**Intellectual Property Upstream IP UP**
**Turmstraße 44**
**4031 Linz (AT)**

(56) Entgegenhaltungen:
EP-A2- 0 435 595      EP-A2- 1 488 863
WO-A1-2006/136670      WO-A1-2007/096204
WO-A1-2016/151855      JP-A- H07 191 702
JP-A- S5 868 414

EP 3 974 073 B2

**Beschreibung**

Gebiet der Technik

Die vorliegende Erfindung geht aus von einem Betriebsverfahren für eine Walzanlage,

- wobei eine einem Walzgerüst der Walzanlage vorgeordnete Zuführeinrichtung dem Walzgerüst ein Metallband zuführt,
- wobei das Walzgerüst das Metallband walzt,
- wobei eine dem Walzgerüst nachgeordnete Abführeinrichtung das Metallband vom Walzgerüst abführt,
- wobei eine Steuereinrichtung der Walzanlage zyklisch jeweils anhand einer Anzahl von endgültigen Dickenabweichungen einer korrespondierenden Anzahl von Abschnitten des Metallbandes von einer auslaufseitigen Solldicke des Metallbandes jeweils eine Anzahl von Sollwerten für eine korrespondierende Anzahl an Stellgliedern ermittelt und die ermittelten Sollwerte an die Stellglieder ausgibt,
- wobei die Stellglieder eine Anstellungseinrichtung des Walzgerüsts zum Einstellen eines Walzspaltes des Walzgerüsts und einen Antrieb des Walzgerüsts zum Antreiben von Walzen des Walzgerüsts und weiterhin entweder die Zuführeinrichtung oder die Abführeinrichtung umfassen,
- wobei der Sollwert für die Zuführeinrichtung eine Sollgeschwindigkeit oder ein Sollmoment ist, der Sollwert für die Anstellungseinrichtung ein Walzspaltsollwert ist, der Sollwert für den Antrieb eine Walzenumfangsgeschwindigkeit oder ein Walzmoment ist und der Sollwert für die Abführeinrichtung eine Sollgeschwindigkeit oder ein Sollmoment ist.

Die vorliegende Erfindung geht weiterhin aus von einem Steuerprogramm, das Maschinencode umfasst, der von einer Steuereinrichtung für eine Walzanlage abarbeitbar ist, wobei die Abarbeitung des Maschinencodes durch die Steuereinrichtung bewirkt, dass die Steuereinrichtung die Walzanlage gemäß einem derartigen Betriebsverfahren betreibt.

Die vorliegende Erfindung geht weiterhin aus von einer Steuereinrichtung für eine Walzanlage, wobei die Steuereinrichtung mit einem derartigen Steuerprogramm programmiert ist, so dass die Steuereinrichtung die Walzanlage gemäß einem derartigen Betriebsverfahren betreibt.

Die vorliegende Erfindung geht weiterhin aus von einer Walzanlage zum Walzen eines Metallbandes,

- wobei die Walzanlage zumindest ein Walzgerüst, eine dem Walzgerüst vorgeordnete Zuführeinrichtung, eine dem Walzgerüst nachgeordnete Abführeinrichtung und eine Steuereinrichtung aufweist,
- wobei die Zuführeinrichtung dem Walzgerüst das Metallband zuführt,
- wobei das Walzgerüst das Metallband walzt,
- wobei die Abführeinrichtung das Metallband vom Walzgerüst abführt,
- wobei die Steuereinrichtung die Walzanlage gemäß einem derartigen Betriebsverfahren betreibt.

Beim Herstellen von Metallband wird nach dem Gießen einer Bramme die Bramme zunächst warmgewalzt, so dass ein Warmband entsteht. Die Dicke des Warmbandes liegt meist im Bereich von wenigen Millimetern, je nach Herstellungsverfahren manchmal auch etwas darüber oder darunter, beispielsweise zwischen 1,0 mm und 20 mm bei einer normalen Warmwalzanlage und zwischen 0,6 mm und 6 mm bei einer sogenannten ESP-Anlage. In manchen Fällen wird das Warmband ohne weitere Dickenreduzierung weiter verarbeitet. In anderen Fällen wird die Banddicke nach dem Warmwalzen in einem Kaltwalzwerk noch weiter reduziert. Ziel des Kaltwalzens ist die Herstellung eines kaltgewalzten Metallbandes, dessen finale Dicke so gut wie möglich und mit möglichst geringer Abweichung mit einer Zieldicke übereinstimmt.

In der Regel weist das fertige Warmband - also nach dem Warmwalzen, aber vor dem Walzen in dem Kaltwalzwerk - Dickenabweichungen auf. Die Dickenabweichungen weisen oftmals sowohl periodische Anteile als auch stochastische Anteile auf. Werden diese Abweichungen nicht kompensiert, weist das Metallband auch nach dem Kaltwalzen derartige Abweichungen auf. Das absolute Ausmaß der Abweichungen ist zwar geringer als beim Warmband, die relative Abweichung bleibt jedoch erhalten. Wenn also - beispielsweise - das Metallband vor dem Kaltwalzen eine Dicke von 3,0 mm und Dickenabweichungen im Bereich von 30 $\mu$m aufweist und weiterhin das Metallband nach dem Kaltwalzen eine Dicke von 1,0 mm aufweist, so weist das Metallband ohne Kompensation der Dickenabweichungen nach dem Kaltwalzen Dickenabweichungen im Bereich von 10 $\mu$m auf.

Stand der Technik

Zum Kompensieren derartiger Abweichungen sind im Stand der Technik verschiedene Vorgehensweisen bekannt.

So ist beispielsweise aus der EP 0 435 595 A2, die die Basis für den Oberbegriff von Anspruch 1 bildet, bekannt, auslaufseitig eines Walzgerüsts die Dicke des gewalzten Metallbandes zu erfassen und eine Dickenregelung des Walzgerüsts vorzunehmen. Weiterhin werden Zugschwankungen kompensiert, da auch diese die Dicke des gewalzten Metallbandes beeinflussen. Um eine relativ hochdynamische Regelung des Zuges zu erreichen, sind zwischen der Zuführeinrichtung und dem Walzgerüst einerseits sowie zwischen dem Walzgerüst und einer dem Walzgerüst nachgeordneten Aufnahmeeinrichtung andererseits Rollen oder ähnliche Elemente vorhanden, mittels derer das Metallband vor und/oder nach dem Walzen in dem Walzgerüst ausgelenkt werden kann. Die Vorgehensweise der EP 0 435 595 A2 basiert auf dem Gedanken, dass die Regelung durch die Zuführeinrichtung selbst und die Aufnahmeeinrichtung selbst sehr träge ist und durch die zusätzlichen Rollen die Dynamik der Regelung erhöht werden kann. In der EP 0 435 595 A2 wird auch eine Vorgehensweise beschrieben, bei welcher einlaufseitig des Walzgerüsts die Dicke und die Geschwindigkeit des Metallbandes erfasst und im Rahmen der Ermittlung der Anstellung des Walzgerüsts verwertet werden.

Aus der EP 3 332 883 A1 ist ebenfalls bekannt, auslaufseitig eines Walzgerüsts die Dicke des gewalzten Metallbandes zu erfassen und eine Dickenregelung des Walzgerüsts vorzunehmen. Periodische Abweichungen werden von stochastischen Abweichungen separiert. Periodische Abweichungen werden als durch Exzentrizitäten der Walzen des Walzgerüsts verursacht angesehen. Entsprechend erfolgt die Korrektur der Anstellung des Walzgerüsts.

Bei der JP 58 068 414 A wird einlaufseitig des Walzgerüsts die Dicke des noch ungewalzten Metallbandes erfasst und über gewisse Längeneinheiten gemittelt. Der Mittelwert wird für die Ansteuerung der Anstellung des Walzgerüsts verwertet.

In der älteren europäischen Patentanmeldung 20184420.6 der Primetals Technologies Germany GmbH, Anmeldetag 07.07.2020, ist ein Betriebsverfahren für eine Walzanlage erläutert, bei dem einlaufseitig des Walzgerüsts für Abschnitte des Walzguts jeweils die Dicke erfasst wird und basierend darauf Vorsteuerwerte für das Walzgerüst und/oder die Zuführeinrichtung ermittelt werden. Geregelte Größen können der Walzspalt, die Zuführgeschwindigkeit, der Zug, das Walzmoment und die Walzgeschwindigkeit sein. Auslaufseitig kann eine Dickenmessung erfolgen. Im Rahmen der Ermittlung der Vorsteuerwerte werden das Frequenzverhalten der Zuführeinrichtung und/oder des Walzgerüsts berücksichtigt. Die Patentanmeldung 20184420.6 ist am Anmeldetag nicht vorveröffentlicht und stellt daher keinen allgemein zugänglichen Stand der Technik dar.

Zusammenfassung der Erfindung

Die Aufgabe der vorliegenden Erfindung besteht darin, Möglichkeiten zu schaffen, mittels derer eine exzellente Kompensation von auslaufseitigen Dickenabweichungen des Metallbandes erreicht werden kann.

Die Aufgabe wird durch ein Betriebsverfahren für eine Walzanlage mit den Merkmalen des Anspruchs 1 gelöst. Vorteilhafte Ausgestaltungen des Betriebsverfahrens sind Gegenstand der abhängigen Ansprüche 2 bis 10.

Erfindungsgemäß wird ein Betriebsverfahren der eingangs genannten Art dadurch ausgestaltet, dass die Steuereinrichtung die Sollwerte anhand der Anzahl von endgültigen Dickenabweichungen unter Berücksichtigung einer Beschreibung des inversen Frequenzverhaltens des jeweiligen Stellgliedes ermittelt.

Von den Erfindern wurde erkannt, dass das Ausmaß, in dem eine bestimmte endgültige Dickenabweichung korrigiert wird, nicht nur von der endgültigen Dickenabweichung selbst abhängt, sondern auch von dem Spektrum der endgültigen Dickenabweichungen. Insbesondere werden in der Regel höherfrequente endgültige Dickenabweichungen nur in geringerem Umfang und mit einem größeren Phasenverzug kompensiert als endgültige Dickenabweichungen mit einer niedrigeren Frequenz. Um auch höherfrequente endgültige Dickenabweichungen in vollem Umfang und ohne Phasenverzug kompensieren zu können, muss daher das Frequenzverhalten des Stellgliedes berücksichtigt werden. Gegebenenfalls weist auch die Messwerterfassung ein Frequenzverhalten auf, das in diesem Fall ebenfalls mit berücksichtigt werden kann. Die Berücksichtigung erfolgt anhand einer Beschreibung des inversen Frequenzverhaltens des Stellgliedes (und gegebenenfalls auch der Messeinrichtung).

In vielen Fällen ist die Anzahl von endgültigen Dickenabweichungen gleich 1. In diesem Fall ist es beispielsweise möglich, dass die Steuereinrichtung die - in diesem Fall einzige - endgültige Dickenabweichung des jeweiligen Zyklus anhand einer endgültigen einlaufseitigen Dicke des Abschnitts des Metallbandes unter Berücksichtigung einer Einlaufgeschwindigkeit, mit welcher der Abschnitt des Metallbandes in das Walzgerüst einläuft, und einer Auslaufgeschwindigkeit, mit welcher der Abschnitt des Metallbandes aus dem Walzgerüst ausläuft, anhand der Massenflussgleichung ermittelt. Der Abschnitt des Metallbandes, auf den die ermittelte endgültige Dickenabweichung bezogen ist, ist in diesem Fall der momentan gewalzte Abschnitt des Metallbandes. Durch diese Vorgehensweise wird eine sogenannte MFC (= mass flow control) realisiert.

Die Einlaufgeschwindigkeit ist diejenige Geschwindigkeit, mit der das Metallband in den Walzspalt einläuft. Die Einlaufgeschwindigkeit unterscheidet sich von der Walzenumfangsgeschwindigkeit um einen Faktor. Der Faktor wird üblicherweise als Nacheilung bezeichnet. In analoger Weise ist die Auslaufgeschwindigkeit diejenige Geschwindigkeit, mit der das Metallband aus dem Walzspalt ausläuft. Die Auslaufgeschwindigkeit unterscheidet sich von der Walzenumfangsgeschwindigkeit ebenfalls um einen Faktor. Dieser Faktor wird üblicherweise als Voreilung bezeichnet.

Die Einlaufgeschwindigkeit kann auch von der Zuführgeschwindigkeit abweichen. Denn die Zuführgeschwindigkeit ist diejenige Geschwindigkeit, mit der das Metallband von der Zuführeinrichtung abgegeben wird. Im Falle einer Abweichung bewirkt die Abweichung, dass sich ein Zug ändert, der einlaufseitig des Walzgerüsts im Metallband herrscht. In analoger Weise kann auch die Auslaufgeschwindigkeit von der Abführgeschwindigkeit abweichen. Denn die Abführgeschwindigkeit ist diejenige Geschwindigkeit, mit der das Metallband von der Abführeinrichtung aufgenommen wird. Im Falle einer Abweichung bewirkt die Abweichung, dass sich ein Zug ändert, der auslaufseitig des Walzgerüsts im Metallband herrscht.

Im Falle einer MFC ist es möglich, dass die endgültige einlaufseitige Dicke des Abschnitts des Metallbandes eine vor dem jeweiligen Zyklus für den momentan gewalzten Abschnitt des Metallbandes einlaufseitig des Walzgerüsts erfasste Dicke des Abschnitts des Metallbandes ist. In diesem Fall wird für den entsprechenden Abschnitt des Metallbandes ein einzelner Wert der einlaufseitigen Dicke erfasst und direkt als endgültige einlaufseitige Dicke des entsprechenden Abschnitts des Metallbandes verwertet. Alternativ ist es möglich, dass die Steuereinrichtung die endgültige einlaufseitige Dicke des Abschnitts des Metallbandes durch eine Filterung von für eine Mehrzahl von Abschnitten des Metallbandes einlaufseitig des Walzgerüsts erfassten Dicken ermittelt.

Das einlaufseitige Erfassen der einlaufseitigen Dicke des Abschnitts des Metallbandes erfolgt, wie bereits erwähnt, zu einem Zeitpunkt, der vor der Ermittlung der endgültigen Dickenabweichung liegt. In Verbindung mit einer allgemein bekannten Wegverfolgung kann jedoch ohne weiteres ermittelt werden, zu welchem Zeitpunkt der entsprechende Abschnitt des Metallbandes gewalzt wird. Analoge Ausführungen gelten auch bei der Verwertung mehrerer einlaufseitig erfasster Dicken.

Die Filterung ist in aller Regel eine Tiefpassfilterung, mittels derer hochfrequente Schwankungen ausgefiltert werden. Vorzugsweise handelt es sich um eine Nullphasenfilterung. Nullphasenfilterungen sind Fachleuten allgemein bekannt. Rein beispielhaft kann die sogenannte IIR (= infinite impulse response) genannt werden. Eine andere Möglichkeit zur Implementierung einer Nullphasenfilterung ist eine Faltung mit einer symmetrischen Impulsantwort eines FIR-Filters (FIR = finite impulse response).

Alternativ ist es möglich, dass zwar - wie bei einer MFC - die Anzahl von endgültigen Dickenabweichungen des jeweiligen Zyklus gleich 1 ist, die endgültige Dickenabweichung jedoch auf einen vor dem momentan gewalzten Abschnitt des Metallbandes gewalzten Abschnitt des Metallbandes bezogen ist. In diesem Fall wird eine sogenannte FBC (= feedback control) realisiert.

Bei einer FBC ist es möglich, dass zwischen dem Walzgerüst und der Abführeinrichtung eine Messeinrichtung angeordnet ist, welche die auslaufseitige Dicke erfasst und der Steuereinrichtung zuführt, und die endgültige Dickenabweichung anhand der erfassten auslaufseitigen Dicke und der auslaufseitigen Solldicke ermittelt wird. Alternativ ist es im Falle einer FBC möglich, dass die Steuereinrichtung die endgültige Dickenabweichung durch eine Filterung einer Mehrzahl von vorläufigen Dickenabweichungen einer korrespondierenden Anzahl von Abschnitten des Metallbandes von der auslaufseitigen Solldicke ermittelt. Die Filterung ist in aller Regel eine Tiefpassfilterung, mittels derer hochfrequente Schwankungen ausgefiltert werden.

Die Filterung ist vorzugsweise eine Nullphasenfilterung. In diesem Fall ist konsequenterweise ein erster Teil der vorläufigen Dickenabweichungen auf Abschnitte des Metallbandes bezogen, die zwar bereits gewalzt sind, aber nach dem Abschnitt des Metallbandes gewalzt wurden, auf den die endgültige Dickenabweichung bezogen ist. Ebenso ist ein zweiter Teil der vorläufigen Dickenabweichungen auf Abschnitte des Metallbandes bezogen, die nicht nur bereits gewalzt sind, sondern sogar vor dem Abschnitt des Metallbandes gewalzt wurden, auf den die endgültige Dickenabweichung bezogen ist.

Für die vorläufigen Dickenabweichungen des ersten Teils der vorläufigen Dickenabweichungen ermittelt die Steuereinrichtung die entsprechenden vorläufigen Dickenabweichungen anhand einer jeweiligen korrespondierenden endgültigen einlaufseitigen Dicke des Metallbandes unter Berücksichtigung einer Einlaufgeschwindigkeit, mit der der jeweilige Abschnitt des Metallbandes in das Walzgerüst einläuft, und einer Auslaufgeschwindigkeit, mit der der jeweilige Abschnitt des Metallbandes aus dem Walzgerüst ausläuft, anhand der Massenflussgleichung. Die entsprechenden Geschwindigkeiten sind bekannt, weil die entsprechenden Abschnitte bereits gewalzt sind. Die Ermittlung dieser vorläufigen Dickenabweichungen ist daher ohne weiteres möglich.

Analog zur Vorgehensweise bei einer MFC ist es möglich, dass für den ersten Teil der vorläufigen Dickenabweichungen die jeweilige endgültige einlaufseitige Dicke des Abschnitts des Metallbandes eine für den jeweiligen Abschnitt des Metallbandes einlaufseitig des Walzgerüsts erfasste Dicke des jeweiligen Abschnitts des Metallbandes ist. Alternativ ist es - wieder analog zur Vorgehensweise bei einer MFC - möglich, dass die Steuereinrichtung die jeweilige endgültige einlaufseitige Dicke des jeweiligen Abschnitts des Metallbandes durch eine Filterung von für eine Mehrzahl von jeweiligen Abschnitten des Metallbandes einlaufseitig des Walzgerüsts erfassten Dicken ermittelt.

Für die vorläufigen Dickenabweichungen des bereits erwähnten zweiten Teils der vorläufigen Dickenabweichungen kann dieselbe Vorgehensweise ergriffen werden. Es ist also möglich, dass auch hier die Steuereinrichtung die vorläufigen Dickenabweichungen anhand der Massenflussgleichung ermittelt. Vorzugsweise erfasst jedoch eine zwischen dem Walzgerüst und der Abführeinrichtung angeordnete Messeinrichtung für Abschnitte des Metallbandes jeweils die auslaufseitige Dicke und führt sie der Steuereinrichtung zu. In diesem Fall kann der zweite Teil der vorläufigen Dickenabweichungen auf Abschnitte des Metallbandes bezogen sein, die vor dem Abschnitt des Metallbandes gewalzt wurden, auf den die endgültige Dickenabweichung bezogen ist. Für den zweiten Teil der vorläufigen Dickenabweichungen kann die Steuereinrichtung daher die jeweilige vorläufige Dickenabweichung anhand der jeweils erfassten auslaufseitigen Dicke und der auslaufseitigen Solldicke ermitteln.

Es ist alternativ möglich, dass die Anzahl von endgültigen Dickenabweichungen des jeweiligen Zyklus größer als 1 ist. Die zugehörigen Abschnitte des Walzguts sind in diesem Fall alle bereits gewalzt. Die Sollwerte werden im Ergebnis für eine endgültige Dickenabweichung ermittelt, die auf einen Ort hinter dem Walzgerüst bezogen ist.

Auch im Falle der Verwertung mehrerer endgültiger Dickenabweichungen ist es möglich, dass die Steuereinrichtung die endgültigen Dickenabweichungen durch eine Filterung einer Mehrzahl von vorläufigen Dickenabweichungen einer korrespondierenden Anzahl von Abschnitten des Metallbandes von der auslaufseitigen Solldicke des Metallbandes ermittelt. Die Filterung ist in aller Regel eine Tiefpassfilterung, mittels derer hochfrequente Schwankungen ausgefiltert werden.

Vorzugsweise ist die Filterung eine Nullphasenfilterung. In diesem Fall ermittelt die Steuereinrichtung - wie zuvor - einen ersten Teil der vorläufigen Dickenabweichungen anhand einer jeweiligen korrespondierenden endgültigen einlaufseitigen Dicke des Metallbandes unter Berücksichtigung einer Einlaufgeschwindigkeit, mit der der jeweilige Abschnitt des Metallbandes in den Walzspalt einläuft, und einer Auslaufgeschwindigkeit, mit der der jeweilige Abschnitt des Metallbandes aus dem Walzspalt ausläuft, anhand der Massenflussgleichung.

Auch kann - ebenso wie zuvor - für den ersten Teil der vorläufigen Dickenabweichungen die jeweilige endgültige einlaufseitige Dicke des Abschnitts des Metallbandes alternativ eine für den jeweiligen Abschnitt des Metallbandes einlaufseitig des Walzgerüsts erfasste Dicke des jeweiligen Abschnitts des Metallbandes sein oder kann die Steuereinrichtung die jeweilige endgültige einlaufseitige Dicke des jeweiligen Abschnitts des Metallbandes durch eine Filterung von für eine Mehrzahl von jeweiligen Abschnitten des Metallbandes einlaufseitig des Walzgerüsts erfassten Dicken ermitteln.

Wie zuvor ist vorzugsweise zwischen dem Walzgerüst und der Abführeinrichtung eine Messeinrichtung angeordnet. Diese Messeinrichtung kann für gewalzte Abschnitte des Metallbandes jeweils einen Messwert für die jeweilige endgültige Dickenabweichung erfassen. Dadurch ist es möglich, dass die Steuereinrichtung für einen zweiten Teil der vorläufigen Dickenabweichungen den für den jeweiligen Abschnitt jeweils erfassten Messwert verwertet.

Für die Art und Weise der Berücksichtigung des inversen Frequenzverhaltens gibt es verschiedene Möglichkeiten.

In dem Fall, dass die Anzahl von endgültigen Dickenabweichungen größer als 1 ist, ist es möglich, dass die Beschreibung des inversen Frequenzverhaltens des jeweiligen Stellgliedes der Steuereinrichtung als jeweiliger Frequenzgang vorgegeben ist und dass die Steuereinrichtung den jeweiligen Sollwert durch eine Transformation des Verlaufs der endgültigen Dickenabweichungen in den Frequenzbereich, eine nachfolgende Multiplikation des transformierten Verlaufs der endgültigen Dickenabweichung mit dem jeweiligen Frequenzgang und eine nachfolgende Rücktransformation in den Zeitbereich ermittelt.

Es ist allgemein bekannt, dass eine Multiplikation im Frequenzbereich einer Faltung im Zeitbereich entspricht. In dem Fall, dass die Anzahl von endgültigen Dickenabweichungen größer als 1 ist, ist es daher alternativ möglich, dass die Beschreibung des inversen Frequenzverhaltens des jeweiligen Stellgliedes der Steuereinrichtung als jeweiliger Faltungskern vorgegeben ist und dass die Steuereinrichtung den jeweiligen Sollwert durch eine Faltung des Verlaufs der endgültigen Dickenabweichungen mit dem jeweiligen Faltungskern ermittelt.

Unabhängig von der Anzahl von endgültigen Dickenabweichungen

- also sowohl für den Fall, dass diese Anzahl gleich 1 ist, als auch für den Fall, dass diese Anzahl größer als 1 ist, - ist es jedoch stets möglich,
- dass die Beschreibung des inversen Frequenzverhaltens des jeweiligen Stellgliedes der Steuereinrichtung durch ein jeweiliges inverses Modell vorgegeben ist,
- dass die Steuereinrichtung dem jeweiligen inversen Modell die endgültige Dickenabweichung eines Abschnitts des Metallbandes zuführt und
- dass die Steuereinrichtung unter Verwertung der zugeführten endgültigen Dickenabweichung mittels des jeweiligen inversen Modells zum einen einen jeweiligen internen Zustand des jeweiligen inversen Modells nachführt und zum anderen den jeweiligen Sollwert ermittelt.

Diese Vorgehensweise ist derzeit bevorzugt. Insbesondere wird durch diese Vorgehensweise der Rechenaufwand minimiert, da die Steuereinrichtung jeweils nur eine einzelne endgültige Dickenabweichung ermitteln muss. Diese Vorgehensweise ist also mit dem geringsten Rechenaufwand verbunden.

Die Erfassung des Frequenzgangs und hierauf aufbauend die Ermittlung bzw. Parametrierung des inversen Modells oder die Ermittlung der Verstärkungen für die einzelnen Frequenzbereiche oder die Ermittlung des Faltungskerns können automatisiert erfolgen. Insbesondere können im laufenden Betrieb der Walzanlage dem Walzspaltsollwert des Walzgerüsts oder einer anderen Stellgröße eines Stellgliedes definierte kleine Störungen eingeprägt werden. Diese Störungen spiegeln sich auslaufseitig des Walzgerüsts in korrespondierenden Schwankungen der auslaufseitigen Dicke des Metallbandes wider. Sofern dem Walzgerüst eine Messeinrichtung nachgeordnet ist, mittels derer diese auslaufseitige Dicke erfasst wird, kann durch eine kombinierte Auswertung der eingeprägten Störungen einerseits und der Schwankungen der auslaufseitigen Dicke andererseits in automatisierter Weise der Frequenzgang ermittelt werden. Dies ist Fachleuten prinzipiell bekannt.

Die Aufgabe wird weiterhin durch ein Steuerprogramm mit den Merkmalen des Anspruchs 11 gelöst. Erfindungsgemäß bewirkt die Abarbeitung des Computerprogramms, dass die Steuereinrichtung die Walzanlage gemäß einem erfindungsgemäßen Betriebsverfahren betreibt.

Die Aufgabe wird weiterhin durch eine Steuereinrichtung mit den Merkmalen des Anspruchs 12 gelöst. Erfindungsgemäß ist die Steuereinrichtung mit einem erfindungsgemäßen Steuerprogramm programmiert, so dass die Steuereinrichtung die Walzanlage gemäß einem erfindungsgemäßen Betriebsverfahren betreibt.

Die Aufgabe wird weiterhin durch eine Walzanlage mit den Merkmalen des Anspruchs 13 gelöst. Erfindungsgemäß betreibt die Steuereinrichtung die Walzanlage gemäß einem erfindungsgemäßen Betriebsverfahren.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1      eine Walzanlage,
FIG 2      ein Ablaufdiagramm,
FIG 3      ein Metallband von oben,
FIG 4      einen strukturellen Aufbau einer Steuereinrichtung,
FIG 5      eine mögliche Ausgestaltung von FIG 4,
FIG 6      eine Modifikation von FIG 5,
FIG 7      eine weitere mögliche Ausgestaltung von FIG 4,
FIG 8      eine Modifikation von FIG 7,
FIG 9      einen Teil des Metallbandes und
FIG 10     einen strukturellen Gesamtaufbau einer Steuereinrichtung.

Beschreibung der Ausführungsformen

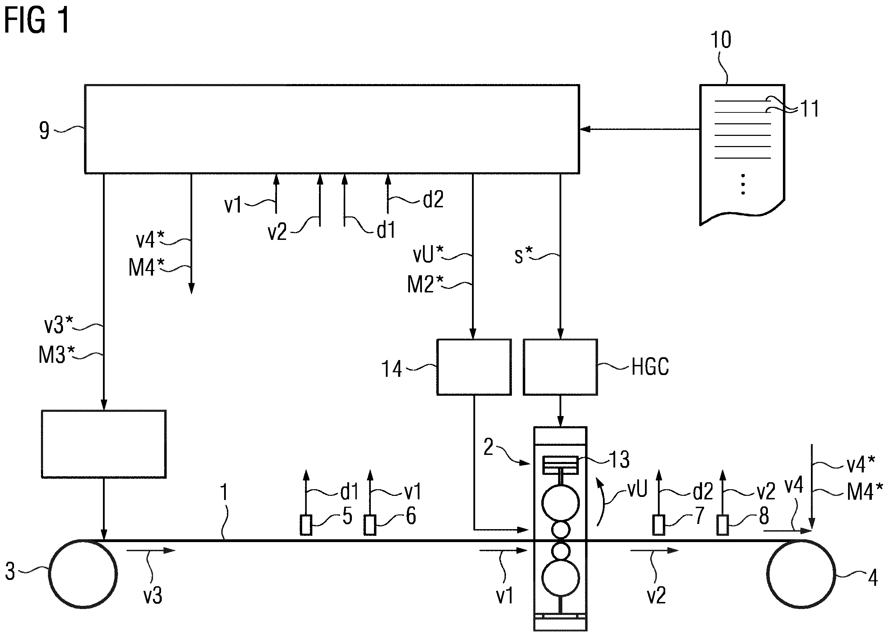

Gemäß FIG 1 weist eine Walzanlage zum Walzen eines Metallbandes 1 ein Walzgerüst 2 auf. Das Walzgerüst 2 kann insbesondere ein Kaltwalzgerüst sein, in dem folglich ein Kaltwalzen des Metallbandes 1 erfolgt. In der Regel umfasst das Walzgerüst 2 zusätzlich zu seinen Arbeitswalzen entsprechend der Darstellung in FIG 1 zumindest auch zwei Stützwalzen. Beispielsweise kann es als Quartogerüst ausgebildet sein. In Manchen Fällen weist das Walzgerüst 2 auch noch mehr Walzen auf. Beispielsweise kann das Walzgerüst 2 als Sextogerüst (zwei Arbeitswalzen, zwei Zwischenwalzen, zwei Stützwalzen) oder als 12-Rollen-Walzgerüst oder als 20-Rollen-Walzgerüst ausgebildet sein. Das Metallband 1 kann aus Stahl, aus Aluminium oder aus einem anderen Metall bestehen, beispielsweise aus Kupfer oder aus Messing.

In dem Walzgerüst 2 wird das Metallband 1 gewalzt. Während des Walzens des Metallbandes 1 läuft das Metallband 1 mit einer Einlaufgeschwindigkeit v1 in das Walzgerüst 2 ein und mit einer Auslaufgeschwindigkeit v2 aus dem Walzgerüst 2 aus. Während des Walzens des Metallbandes 1 drehen sich die einzelnen Walzen des Walzgerüsts 2 mit einer Walzenumfangsgeschwindigkeit vU. Die Walzenumfangsgeschwindigkeit vU unterscheidet sich in der Regel sowohl von der Einlaufgeschwindigkeit v1 als auch von der Auslaufgeschwindigkeit v2 um einen jeweiligen Faktor. Der Faktor, um den die Walzenumfangsgeschwindigkeit vU sich von der Einlaufgeschwindigkeit v1 unterscheidet, wird üblicherweise als Nacheilung bezeichnet. In analoger Weise wird der Faktor, um den die Walzenumfangsgeschwindigkeit vU sich von der Auslaufgeschwindigkeit v2 unterscheidet, üblicherweise als Voreilung bezeichnet.

Die Walzanlage weist weiterhin eine Zuführeinrichtung 3 auf. Die Zuführeinrichtung 3 ist dem Walzgerüst 2 vorgeordnet. Von der Zuführeinrichtung 3 wird das Metallband 1 dem Walzgerüst 2 mit einer Zuführgeschwindigkeit v3 zugeführt. Die Zuführeinrichtung 3 ist gemäß FIG 1 als Haspel ausgebildet. Sie könnte aber auch anders ausgebildet sein, beispielsweise als Treiber oder als weiteres, vom Walzgerüst 2 verschiedenes Walzgerüst. Die Zuführeinrichtung 3 kann auch als sogenannte S-Rolle ausgebildet sein, also mehrere Rollen, über welche das Metallband 1 im Ergebnis S-förmig geführt wird.

Die Walzanlage weist weiterhin eine Abführeinrichtung 4 auf. Die Abführeinrichtung 4 ist dem Walzgerüst 2 nachgeordnet. Von der Abführeinrichtung 4 wird das Metallband 1 vom Walzgerüst 2 mit einer Abführgeschwindigkeit v4 abgeführt. Die Abführeinrichtung 4 ist gemäß FIG 1 als Haspel ausgebildet. Sie könnte aber auch anders ausgebildet sein, beispielsweise als Treiber oder als weiteres, vom Walzgerüst 2 verschiedenes Walzgerüst. Die Abführeinrichtung 4 kann auch als sogenannte S-Rolle ausgebildet sein, also mehrere Rollen, über welche das Metallband 1 im Ergebnis S-förmig geführt wird.

Die Zuführgeschwindigkeit v3 ist diejenige Geschwindigkeit, mit der das Metallband 1 dem Walzgerüst 2 von der Zuführeinrichtung 3 zugeführt wird. Sie kann von der Einlaufgeschwindigkeit v1 abweichen. Im Falle einer Abweichung bewirkt die Abweichung, dass sich ein Zug ändert, der einlaufseitig des Walzgerüsts 2 im Metallband 1 herrscht. In analoger Weise ist die Abführgeschwindigkeit v4 diejenige Geschwindigkeit, mit der das Metallband 1 von der Abführeinrichtung 4 vom Walzgerüst 2 abgeführt wird. Sie kann von der Auslaufgeschwindigkeit v2 abweichen. Im Falle einer Abweichung bewirkt die Abweichung, dass sich ein Zug ändert, der auslaufseitig des Walzgerüsts 2 im Metallband 1 herrscht.

Es ist möglich, dass zwischen der Zuführeinrichtung 3 und dem Walzgerüst 2 eine Messeinrichtung 5 angeordnet ist. Mittels der Messeinrichtung 5 wird, sofern sie vorhanden ist, zyklisch immer wieder ein Messwert für die Dicke d1 des Metallbandes 1 einlaufseitig des Walzgerüsts 2 erfasst. Weiterhin kann zusätzlich eine weitere Messeinrichtung 6 vorhanden sein, mittels derer immer wieder ein Messwert für eine Geschwindigkeit des Metallbandes 1 einlaufseitig des Walzgerüsts 2 erfasst wird. Dieser Messwert kann insbesondere als Messwert für die Einlaufgeschwindigkeit v1 verwertet werden.

Gemäß FIG 1 kann weiterhin zwischen dem Walzgerüst 2 und der Abführeinrichtung 4 eine weitere Messeinrichtung 7 angeordnet sein. Mittels der Messeinrichtung 7 wird, sofern sie vorhanden ist, zyklisch immer wieder ein Messwert für die Dicke d2 des Metallbandes 1 auslaufseitig des Walzgerüsts 2 erfasst. Weiterhin kann zusätzlich eine weitere Messeinrichtung 8 vorhanden sein, mittels derer immer wieder ein Messwert für eine Geschwindigkeit des Metallbandes 1 auslaufseitig des Walzgerüsts 2 erfasst wird. Dieser Messwert kann insbesondere als Messwert für die Auslaufgeschwindigkeit v2 verwertet werden.

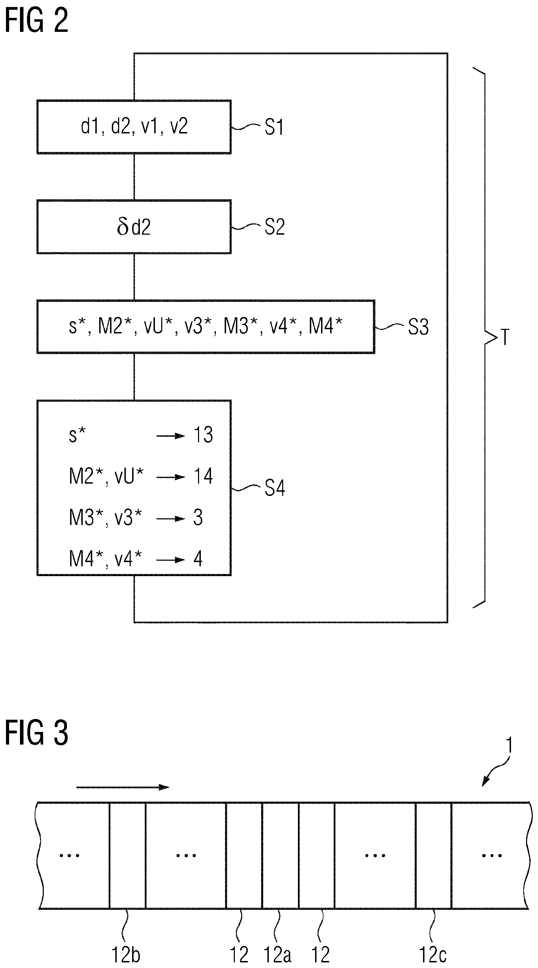

Die jeweils erfassten Dickenwerte d1, d2 und auch die jeweils erfassten Werte für die Einlaufgeschwindigkeit v1 und die Auslaufgeschwindigkeit v2 werden einer Steuereinrichtung 9 zugeführt, die ebenfalls Bestandteil der Walzanlage ist. Die Steuereinrichtung 9 ist mit einem Steuerprogramm 10 programmiert. Das Steuerprogramm 10 umfasst Maschinencode 11, der von der Steuereinrichtung 9 abarbeitbar ist. Die Programmierung der Steuereinrichtung 9 mit dem Steuerprogramm 10 bzw. die Abarbeitung des Maschinencodes 11 durch die Steuereinrichtung 9 bewirkt, dass die Steuereinrichtung 9 die Walzanlage gemäß einem Betriebsverfahren betreibt, das nachstehend zunächst in Verbindung mit FIG 2 und sodann auch den weiteren FIG näher erläutert wird.

Gemäß FIG 2 führt die Steuereinrichtung 9 zyklisch immer wieder Schritte S1 bis S4 aus. Meist führt die Steuereinrichtung 9 die Schritte S1 bis S4 sogar streng getaktet aus, also mit einer festen Zykluszeit T. Die Zykluszeit T liegt in der Regel weit unter 1 s, insbesondere unter 100 ms. Beispielsweise kann sie bei 8 ms liegen.

Das Metallband 1 kann entsprechend der Darstellung in FIG 3 in eine Anzahl von Abschnitten 12 unterteilt werden. Die Unterteilung ist nur virtuell, also rein gedanklich. Die Abschnitte 12 sind in FIG 3 teilweise mit einem kleinen Buchstaben (a, b usw.) ergänzt, um sie bei Bedarf voneinander unterscheiden zu können. Der Pfeil in FIG 3 bezeichnet die Transportrichtung des Metallbandes 1.

Die nachfolgenden Ausführungen zu FIG 2 und auch den anderen FIG beziehen sich jeweils auf einen einzelnen Zyklus, also eine einmalige Ausführung der Schritte S1 bis S4. Im jeweiligen Zyklus wird in dem Walzgerüst 2 entsprechend der Darstellung in FIG 3 ein einzelner Abschnitt 12 des Metallbandes 1 gewalzt. Der momentan gewalzte Abschnitt 12 des Metallbandes 1 wird nachstehend mit dem Bezugszeichen 12a versehen. Im vorhergehenden Zyklus ist der vorhergehende Abschnitt 12 des Metallbandes 1 gewalzt worden. Im nächsten Zyklus wird der nachfolgende Abschnitt 12 des Metallbandes 1 gewalzt. Analoge Ausführungen gelten für die anderen Abschnitte 12 des Metallbandes 1.

Gemäß FIG 2 nimmt die Steuereinrichtung 9 im Schritt S1 die jeweils erfassten Dickenwerte d1, d2 und gegebenenfalls auch die jeweils erfassten Werte für die Einlaufgeschwindigkeit v1 und die Auslaufgeschwindigkeit v2 entgegen. In diesem Zyklus wird der Abschnitt 12a gewalzt. Der erfasste Dickenwert d1 ist auf einen anderen Abschnitt 12 des Metallbandes 1 bezogen, der nach dem momentan gewalzten Abschnitt 12 des Metallbandes 1 gewalzt wird. Beispielsweise kann der Dickenwert d1 auf den mit dem Bezugszeichen 12b bezeichneten Abschnitt 12 des Metallbandes 1 bezogen sein. Der erfasste Dickenwert d2 ist hingegen auf einen Abschnitt 12 des Metallbandes 1 bezogen, der bereits gewalzt ist, also vor dem momentan gewalzten Abschnitt 12 des Metallbandes 1 gewalzt wurde. Beispielsweise kann der Dickenwert d2 auf den mit dem Bezugszeichen 12c bezeichneten Abschnitt 12 des Metallbandes 1 bezogen sein. Die erfassten Geschwindigkeiten v1, v2 wiederum sind auf den momentan gewalzten Abschnitt 12a bezogen.

Im Schritt S2 selektiert die Steuereinrichtung 9 eine Anzahl von endgültigen Dickenabweichungen $\delta d2$. die im Schritt S2 selektierten endgültigen Dickenabweichungen $\delta d2$ sind diejenigen endgültigen Dickenabweichungen $\delta d2$, welche im Schritt S3 und hierauf aufbauend auch im S4 verwertet werden. In der Regel ist die Anzahl an selektierten Dickenabweichungen $\delta d2$ gleich 1. Die Steuereinrichtung 9 selektiert also im Schritt S2 eine einzige endgültige Dicken-

EP 3 974 073 B2

abweichung δd2. Es sind aber auch Ausgestaltungen der vorliegenden Erfindung möglich, bei denen die Steuereinrichtung 9 im Schritt S2 mehrere endgültige Dickenabweichung δd2 selektiert. In diesem Fall ist jede einzelne selektierte endgültige Dickenabweichung δd2 auf einen Abschnitt 12 einer korrespondierenden Anzahl von Abschnitten 12 des Metallbandes 1 bezogen. Im Falle einer einzigen selektiert endgültigen Dickenabweichung δd2 ist die selektierte endgültige Dickenabweichung 5d2' entweder auf den Abschnitt 12a oder auf den Abschnitt 12c bezogen.

Jede einzelne endgültige Dickenabweichung δd2 ist die Differenz zwischen einer endgültigen Dicke d2' des Metallbandes 1 auslaufseitig des Walzgerüsts 2 und der zugehörigen Solldicke d2* des Metallbandes 1 auslaufseitig des Walzgerüsts 2. Die jeweilige endgültige Dicke d2' ist also die entsprechende Dicke d2' des Metallbandes 1 nach dem Walzen in dem Walzgerüst 2. Die jeweilige endgültige Dicke d2' ist auf den entsprechenden Abschnitt 12 des Metallbandes 2 bezogen. Mögliche Implementierungen des Schrittes S2 werden aus den späteren Ausführungen ersichtlich werden.

Im Schritt S3 ermittelt die Steuereinrichtung 9 eine Anzahl von Sollwerten s*, M2*, vU*, v3*, M3*, v4*, M4* für eine korrespondierende Anzahl an Stellgliedern 13, 14, 3, 4. Die Steuereinrichtung 9 verwertet im Rahmen der Ermittlung der Sollwerte s*, M2*, vU*, v3*, M3*, v4*, M4* die genannte Anzahl von endgültigen Dickenabweichungen δd2. Im Schritt S4 gibt die Steuereinrichtung 9 die ermittelten Sollwerte s*, M2*, vU*, v3*, M3*, v4*, M4* an die Stellglieder 13, 14, 3, 4 (genauer: an den Stellgliedern 13, 14, 3, 4 vorgeordnete Regler) aus. Die Sollwerte s*, M2*, vU*, v3*, M3*, v4*, M4* können Basissollwerte sein, also Sollwerte, welche einen resultierenden Sollwert für das entsprechende Stellglied 13, 14, 3, 4 vollständig oder zumindest nahezu vollständig festlegen. Oftmals handelt es sich jedoch um Zusatzsollwerte, also Sollwerte, die auf einen derartigen Basissollwert aufgeschaltet bzw. zu einem derartigen Basissollwert addiert werden.

Die Anzahl an Stellgliedern 13, 14, 3, 4 und die Art der Stellglieder 13, 14, 3, 4 können nach Bedarf gewählt werden. Stets ist eines der Stellglieder 13, 14, 3, 4 eine Anstellungseinrichtung 13 des Walzgerüsts 2 zum Einstellen eines Walzspaltes des Walzgerüsts 2. Somit ist der zugehörige Sollwert s* ein Walzspaltsollwert s*, der beispielsweise an eine sogenannte HGC (hydraulic gap control) ausgegeben wird. Weiterhin ist eines der Stellglieder 13, 14, 3, 4 ein Antrieb 14 des Walzgerüsts 2 zum Antreiben von Walzen des Walzgerüsts 2. Somit ist der zugehörige Sollwert vU*, M2* eine Walzenumfangsgeschwindigkeit vU* oder ein Walzmoment M2*. Weiterhin kann eines der Stellglieder 13, 14, 3, 4 die Zuführeinrichtung 3 sein. In diesem Fall ist der zugehörige Sollwert v3*, M3* eine Sollgeschwindigkeit v3* oder ein Sollmoment M3*. Alternativ zur Zuführeinrichtung 3 kann eines der Stellglieder 13, 14, 3, 4 die Abführeinrichtung 4 sein. In diesem Fall ist der zugehörige Sollwert v4*, M4* eine Sollgeschwindigkeit v4* oder ein Sollmoment M4*.

Vorliegend gilt also, dass die Stellglieder 13, 14, 3, 4 entweder die Anstellungseinrichtung 13 des Walzgerüsts 2, den Antrieb 14 des Walzgerüsts 2 und die Zuführeinrichtung 3 umfassen oder die Anstellungseinrichtung 13 des Walzgerüsts 2, den Antrieb 14 des Walzgerüsts 2 und die Abführeinrichtung 4 umfassen. Hiermit korrespondierend ermittelt die Steuereinrichtung 9 als Sollwerte den Sollwert s* für den Walzspalt und den Sollwert M2* für das Walzmoment oder den Sollwert vU* für die Walzenumfangsgeschwindigkeit vU und weiterhin entweder den Sollwert v3* oder M3* für die Zuführeinrichtung 3 oder alternativ den Sollwert v4* oder M4* für die Abführeinrichtung 4.

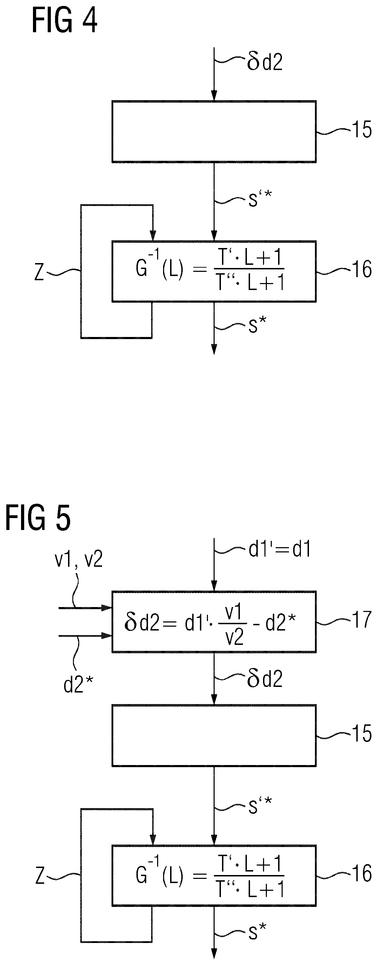

Kern der Erfindung ist die Art und Weise, auf welche die Steuereinrichtung 9 im Schritt S3 bei der Ermittlung der Sollwerte s*, M2*, vU*, v3*, M3*, v4*, M4* die genannte Anzahl von endgültigen Dickenabweichungen δd2 verwertet. Diese Art und Weise wird nachstehend in Verbindung mit FIG 4 für die Ermittlung des Walzspaltsollwertes s* für die Anstellungseinrichtung 13 näher erläutert. Für die anderen Stellglieder 3, 4, 14 und die anderen Sollwerte M2*, vU*, v3*, M3*, v4*, M4* gelten analoge Ausführungen. Weiterhin wird die vorliegende Erfindung in Verbindung mit einer einzigen endgültigen Dickenabweichung δd2 erläutert. Für die Verwertung mehrerer endgültiger Dickenabweichungen δd2 gelten analoge Ausführungen.

Gemäß FIG 4 umfasst die Steuereinrichtung 9 einen Reglerblock 15 und einen Modifikationsblock 16. Die Aufteilung in den Reglerblock 15 und den Modifikationsblock 16 erfolgt, um die vorliegende Erfindung einfacher erläutern zu können. Prinzipiell können der Reglerblock 15 und der Modifikationsblock 16 auch zu einem gemeinsamen Block zusammengefasst sein. Auch kann bei entsprechender Anpassung der dem jeweiligen Block 15, 16 zugeführten Größen und der von dem jeweiligen Block 15, 16 abgegebenen Größen die Reihenfolge der Blöcke 15, 16 vertauscht sein. Der Reglerblock 15 und der Modifikationsblock 16 werden von der Steuereinrichtung 9 meist aufgrund der Ausführung des Steuerprogramms 10 als Softwareblöcke implementiert.

Dem Reglerblock 15 wird die endgültige Dickenabweichung δd2 zugeführt. Der Reglerblock 15 ermittelt anhand einer durch die Implementierung des Reglerblocks 15 festgelegten Reglercharakteristik einen vorläufigen Sollwert s'*. Die Reglercharakteristik kann beispielsweise nach Art eines P-Reglers (also eines Proportionalreglers), eines PI-Reglers (also eines Proportional-Integral-Reglers), einer unter Verwendung eines Beobachters implementierten Reglerstruktur usw. implementiert sein. Der Reglerblock 15 als solcher kann so wie im Stand der Technik auch ausgebildet sein.

Der vorläufige Sollwert s'* wird vom Reglerblock 15 an den Modifikationsblock 16 übertragen. Der Modifikationsblock 16 modifiziert den vorläufigen Sollwert s'* und ermittelt so den (endgültigen) Sollwert s*. Hierbei - und dies ist das entscheidende - wird im Modifikationsblock 16 eine Beschreibung des inversen Frequenzverhaltens der Anstellungseinrichtung 13 berücksichtigt.

Im Ergebnis ist der Steuereinrichtung 9 also eine Beschreibung vorgegeben, die das Frequenzverhalten der Anstellungseinrichtung 13 direkt charakterisiert. Anders ausgedrückt: Anhand der genannten Beschreibung kann das Frequenzverhalten der Anstellungseinrichtung 13 ermittelt werden. Die Steuereinrichtung 9 ermittelt also nicht nur den Sollwert s* auf eine Art und Weise, mittels derer das entsprechende inverse Frequenzverhalten berücksichtigt wird. Vielmehr kennt die Steuereinrichtung 9 explizit das entsprechende inverse Frequenzverhalten als solches. Der Steuereinrichtung 9 sind also Kenngrößen bekannt, die das inverse Frequenzverhalten definieren. Dies wird nachstehend für das Walzgerüst 2 und dessen Anstellung näher erläutert.

Das Walzgerüst 2 kann auf verschiedene Art und Weise modelliert werden. Im einfachsten Fall wird das Walzgerüst 2 als PT1-Glied modelliert. Alternativ kommt eine Modellierung höherer Ordnung in Frage. Die Modellierung beschreibt das Walzgerüst 2 als solches, gegebenenfalls einschließlich seiner Steuerung (HGC).

Das Frequenzverhalten des Walzgerüsts 2 kann beispielsweise durch eine Übertragungsfunktion beschrieben werden. Nachfolgend wird - wie allgemein üblich - die Übertragungsfunktion als solche mit G bezeichnet. Mit L wird der Laplace-Operator bezeichnet. Diese Vorgehensweise wird vorliegend ergriffen, weil das Bezugszeichen s* bereits vergeben ist, nämlich als Bezeichnung für den Walzspaltsollwert. In üblicher Weise müsste daher der Walzspaltistwert mit dem Bezugszeichen s versehen werden. Mit s wird üblicherweise aber auch der Laplace-Operator bezeichnet. Eine Verwendung des Bezugszeichen s* für den Walzspaltsollwert und des Bezugszeichen s für den Laplace-Operator könnte daher unnötige Verwirrungen auslösen.

Mit der genannten Festlegung lässt sich die Übertragungsfunktion G(L) schreiben als

$$G(L) = \frac{b_m \cdot L^m + b_{m-1} \cdot L^{m-1} + ... + b_1 \cdot L + b_0}{c_n \cdot L^n + c_{n-1} \cdot L^{n-1} + ... + c_1 \cdot L + c_0} \qquad (1)$$

Hierbei sind $b_i$ (mit $i = 1,2...m$) und $c_j$ (mit $j = 1,2...n$) konstante Koeffizienten. Der Grad m des Zählerpolynoms ist maximal so groß wie der Grad n des Nennerpolynoms. Wenn das Walzgerüst 2 als PT1-Glied modelliert wird, ergibt sich die Übertragungsfunktion G(L) beispielsweise als

$$G(L) = \frac{1}{T' \cdot L + 1} \qquad (2)$$

wobei T' eine charakteristische Zeitkonstante der Anstellungseinrichtung 13 ist.

Für die zugehörige inverse Übertragungsfunktion $G^{-1}(L)$ gilt im allgemeinen Fall

$$G^{-1}(L) = \frac{1}{G(L)} = \frac{c_n \cdot L^n + c_{n-1} \cdot L^{n-1} + ... + c_1 \cdot L + c_0}{b_m \cdot L^m + b_{m-1} \cdot L^{m-1} + ... + b_1 \cdot L + b_0} \qquad (3)$$

Das inverse Übertragungsverhalten $G^{-1}(L)$ ist somit eindeutig definiert. Wenn das Walzgerüst 2 als PT1-Glied modelliert wird, ergibt sich die zugehörige inverse Übertragungsfunktion $G^{-1}(s)$ exakt zu

$$G^{-1}(L) = \frac{T' \cdot L + 1}{1} \qquad (4)$$

Wenn die inverse Übertragungsfunktion $G^{-1}(L)$ exakt modelliert wird, wird das modellierte Verhalten des Walzgerüsts 2 jedoch oftmals instabil. In manchen Fällen kann sogar das Verhalten des realen Walzgerüsts 2 instabil werden. Beispielsweise ergibt die Inverse eines PT1-Gliedes ein PD-Glied. Ein PD-Glied verstärkt hohe Frequenzen extrem. Auch kann das theoretisch ermittelbare Ausgangssignal eines PD-Gliedes in der Realität nicht umgesetzt werden. Die Ursache hierfür sind Stellbegrenzungen der Anstellungseinrichtung 13. Zur Gewährleistung der Stabilität und Realisierbarkeit erweitert man das Nennerpolynom der inversen Übertragungsfunktion $G^{-1}(L)$ daher um einen Anteil, der proportional der höchsten Potenz von L im Zähler der inversen Übertragungsfunktion $G^{-1}(L)$ ist. Dies ist Fachleuten vom Ansatz her bekannt. Es kann diesbezüglich auf das Fachbuch "Stabile Neuronale Online Identifikation und Kompensation statischer Nichtlinearitäten" von Thomas Frenz verwiesen werden. Die tatsächlich verwendete inverse Modellierung des Frequenzverhalten des Walzgerüsts 2 wird somit durch eine modifizierte inverse Übertragungsfunktion $G^{-1}(L)$ beschrieben, welche die Form

$$G^{-1}(L) = \frac{T'' \cdot L + 1}{T'' \cdot L + 1} \tag{5}$$

aufweist. T" ist eine kleine Zeit, also eine Zeit, die erheblich kleiner als die charakteristische Zeitkonstante T' des Walzgerüsts 2 ist. Je kleiner die Zeit T" gewählt werden kann, desto besser ist die Modellierung des inversen Frequenzverhaltens des Walzgerüsts 2. In der Praxis wird die Zeit T" gleich der Zykluszeit T oder in etwa gleich der Zykluszeit T gewählt werden.

Aufgrund obiger Sachverhalte ist es möglich, der Steuereinrichtung 9 entsprechend der Darstellung in FIG 4 durch entsprechende Implementierung des Modifikationsblocks 16 ein entsprechendes inverses Modell der Anstellungseinrichtung 13 vorzugeben. Der Modifikationsblock 16 entspricht also dem inversen Modell. Der Modifikationsblock 16 bzw. das inverse Modell beschreibt, wie zuvor erläutert, das inverse Frequenzverhalten der Anstellungseinrichtung 13. Transportzeiten, konstante Totzeiten und dergleichen können nach Bedarf innerhalb oder außerhalb des Modifikationsblocks 16 berücksichtigt werden.

Dem Modifikationsblock 16 wird - getaktet mit der Zykluszeit T - jeweils die selektierte endgültige Dickenabweichung δd2 des entsprechenden Abschnitts 12 des Metallbandes 1 zugeführt. Die Steuereinrichtung 9 ermittelt mittels des Modifikationsblocks 16 unter zusätzlicher Berücksichtigung eines internen Zustands Z des inversen Modells 16 den Sollwert s* für die Anstellungseinrichtung 13 und gibt den Sollwert s* an die Anstellungseinrichtung 13 aus. Weiterhin führt die Steuereinrichtung 9 den internen Zustand Z unter Verwertung der selektierten endgültigen Dickenabweichung δd2 und des vorherigen internen Zustands Z des Modifikationsblocks 16 nach. Die Berücksichtigung des internen Zustands Z und das Nachführen des internen Zustands Z sind erforderlich, da anderenfalls der Modifikationsblock 16 keine Kenntnis des bisherigen Verlaufs der endgültigen Dickenabweichung δd2 speichern könnte und somit kein Frequenzverhalten modellieren könnte, sondern lediglich ein rein proportionales Verhalten. Der Zustand Z kann alternativ ein Skalar oder eine Vektorgröße sein.

Analoge Ausführungen gelten, wie bereits erwähnt, für die anderen Stellglieder 14, 3, 4.

Nachstehend werden in Verbindung mit den weiteren FIG konkrete mögliche Ausgestaltungen der vorliegenden Erfindung näher erläutert. Im Rahmen dieser Ausgestaltungen wird stets davon ausgegangen, dass die Anzahl von selektierten endgültigen Dickenabweichungen δd2 des jeweiligen Zyklus gleich 1 ist.

Entsprechend der Darstellung in FIG 5 ist dem Reglerblock 15 ein Ermittlungsblock 17 vorgeordnet. Der Ermittlungsblock 17 wird von der Steuereinrichtung 9 - analog zum Reglerblock 15 und zum Modifikationsblock 16 - meist aufgrund der Ausführung des Steuerprogramms 10 als Softwareblock implementiert. Dem Softwareblock 17 wird eine endgültige einlaufseitige Dicke d1' zugeführt. Die endgültige einlaufseitige Dicke d1' ist auf denjenigen Abschnitt 12 des Metallbandes 1 bezogen, der im jeweiligen Zyklus gewalzt wird, also den Abschnitt 12a.

Im Rahmen der Ausgestaltung gemäß FIG 5 ist die endgültige einlaufseitige Dicke d1' direkt identisch mit einer einlaufseitig erfassten Dicke d1, also derjenigen Dicke d1, die mittels der Messeinrichtung 5 einlaufseitig des Walzgerüsts 2 für denselben Abschnitt 12 des Metallbandes 1 erfasst wurde. Das Erfassen der einlaufseitigen Dicke d1 erfolgte selbstverständlich in einem früheren Zyklus. In Verbindung mit einer Zwischenspeicherung und einer Wegverfolgung kann jedoch ohne weiteres ermittelt werden, in welchem Zyklus die erfasste einlaufseitige Dicke d1 als endgültige einlaufseitige Dicke d1' verwertet werden muss. Der Ermittlungsblock 18 implementiert also zusätzlich zu der reinen Ermittlung auch ein Transportmodell, welches den Transport eines Abschnitts 12 vom Ort der Erfassungseinrichtung 5 zum Walzgerüst 2 modelliert.

Dem Ermittlungsblock 17 werden weiterhin die aktuelle Einlaufgeschwindigkeit v1 und die aktuelle Auslaufgeschwindigkeit v2 zugeführt. Bei diesen Werten kann es sich beispielsweise um die im jeweiligen Zyklus mittels der Messeinrichtungen 6 und 8 erfassten Messwerte handeln. Schließlich wird dem Ermittlungsblock 17 der Sollwert d2* für die auslaufseitige Dicke des Metallbandes 1 zugeführt, also die Solldicke d2*.

Der Ermittlungsblock 17 ermittelt anhand der Massenflussgleichung die endgültige Dickenabweichung δd2. Insbesondere ermittelt der Ermittlungsblock 17 die endgültige Dickenabweichung δd2 anhand der Beziehung

$$\delta d2 = d1' \cdot \frac{v1}{v2} - d2* \tag{6}$$

Die ermittelte endgültige Dickenabweichung δd2 ist auf den Abschnitt 12a des Metallbandes 1 bezogen, der in dem Walzgerüst 2 momentan gewalzt wird. Mittels der Ausgestaltung gemäß FIG 5 wird also eine sogenannte Massenflussregelung (mass flow control) realisiert.

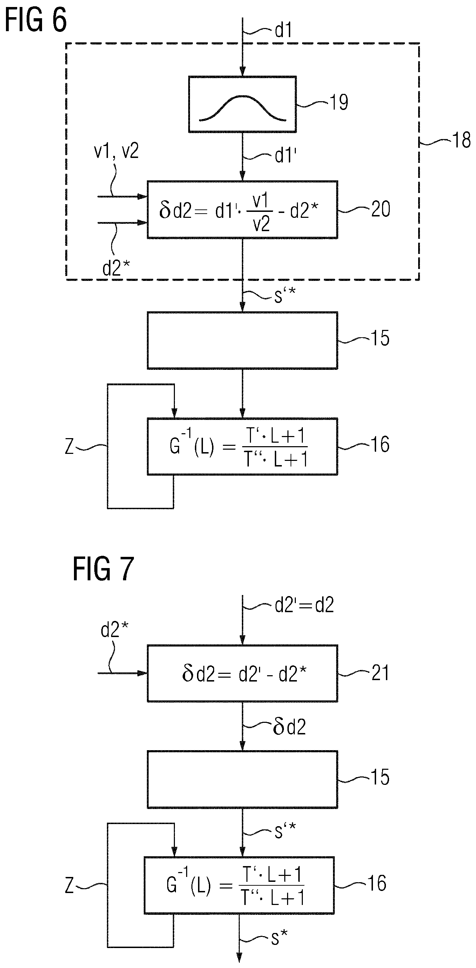

FIG 6 zeigt eine Modifikation von FIG 5. Auch im Rahmen der Modifikation von FIG 6 ist die selektierte endgültige Dickenabweichung δd2 auf den Abschnitt 12a des Metallbandes 1 bezogen, der in dem Walzgerüst 2 momentan gewalzt wird. Auch mittels der Ausgestaltung gemäß FIG 6 wird also eine Massenflussregelung realisiert. Im Unterschied zu FIG 5 ist jedoch der Ermittlungsblock 17 durch einen anderen Ermittlungsblock 18 ersetzt. Der Ermittlungsblock 18 wird von der Steuereinrichtung 9 - analog zum Ermittlungsblock 17 - in der Regel aufgrund der Ausführung des Steuerprogramms 10 als Softwareblock implementiert.

Der Ermittlungsblock 18 umfasst ein Transportmodell 19 und einen Rechenblock 20. Mittels des Transportmodells 19 erfolgt eine Modellierung der Wegverfolgung von Abschnitten 12 nach dem Passieren der Erfassungseinrichtung 5. Weiterhin erfolgt eine Ermittlung der endgültigen eingangsseitigen Dicke d1'. Diese Ermittlung erfolgt durch eine Filterung von mehreren einlaufseitig des Walzgerüsts 2 erfassten Dicken d1. Dies ist in FIG 6 dadurch angedeutet, dass das Transportmodell 19 als Filterfunktion eine Filterkurve implementiert. Die endgültige eingangsseitige Dicke d1' wird dem Rechenblock 20 zugeführt, der - analog zum Ermittlungsblock 17 - anhand der Massenflussgleichung die endgültige Dickenabweichung $\delta d2$ ermittelt.

Die Filterung des Transportmodells 19 ist in aller Regel eine Tiefpassfilterung, mittels derer hochfrequente Schwankungen ausgefiltert werden. Vorzugsweise handelt es sich um eine Nullphasenfilterung.

Im Rahmen der Ausgestaltung gemäß FIG 7 ist die endgültige Dickenabweichung $\delta d2$ auf einen Abschnitt 12c des Metallbandes 1, der bereits vor dem momentan gewalzten Abschnitt 12a des Metallbandes 1 gewalzt wurde. Mittels der Ausgestaltung gemäß FIG 7 wird also eine sogenannte rückgekoppelte Regelung (feedback control) realisiert.

Konkret ist es möglich, dass dem Reglerblock 15 entsprechend der Darstellung in FIG 7 als endgültige Dickenabweichung $\delta d2$ ein Wert zugeführt wird, der direkt und unmittelbar anhand des Messwertes der Messeinrichtung 7 ermittelt wird. Insbesondere kann in einem Rechenblock 21 die Differenz der Solldicke d2* und einer auf die Auslaufseite des Walzgerüsts 2 bezogenen endgültigen Dicke d2' ermittelt werden und als endgültige Dickenabweichung $\delta d2$ an den Reglerblock 15 ausgegeben werden. Als endgültige Dicke d2' wird dem Rechenblock 21 in der Ausgestaltung gemäß FIG 7 direkt die für den Abschnitt 12c auslaufseitig erfasste Dicke d2 zugeführt. Der Rechenblock 21 kann von der Steuereinrichtung 9 ebenfalls aufgrund der Ausführung des Steuerprogramms 10 als Softwareblock implementiert werden.

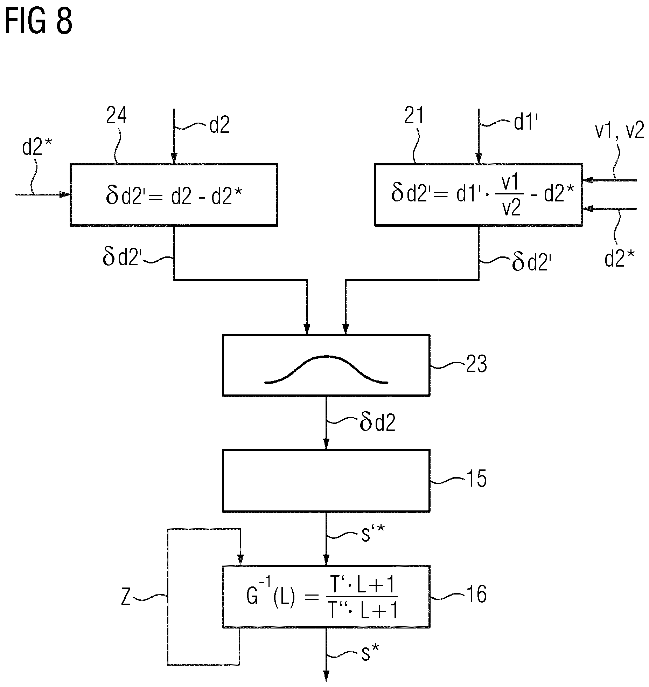

FIG 8 zeigt eine Modifikation von FIG 7. Auch im Rahmen der Modifikation von FIG 8 ist die ermittelte endgültige Dickenabweichung $\delta d2$ auf den Abschnitt 12c des Metallbandes 1 bezogen, der in dem Walzgerüst 2 bereits gewalzt wurde. Auch mittels der Ausgestaltung gemäß FIG 6 wird also eine rückgekoppelte Regelung realisiert. Im Unterschied zu FIG 7 ist dem Rechenblock 21 jedoch der Rechenblock 21 durch einen Rechenblock 22 und einen nachgeordneten Filterblock 23 ersetzt. Zusätzlich kann dem Rechenblock 22 ein weiterer Rechenblock 24 parallel geschaltet sein. Die Blöcke 22 und 23 und gegebenenfalls auch der Block 24 werden von der Steuereinrichtung 9 - analog zu den anderen Blöcken - in der Regel aufgrund der Ausführung des Steuerprogramms 10 als Softwareblock implementiert.

Dem Filterblock 23 wird - bezogen auf den jeweiligen Zyklus - eine Mehrzahl von vorläufigen Dickenabweichungen $\delta d2$' zugeführt. Die vorläufigen Dickenabweichungen $\delta d2$' sind auf eine korrespondierende Anzahl von Abschnitten 12 des Metallbandes 1 bezogen. Sie geben die jeweilige Abweichung der Dicke d2 des entsprechenden Abschnitts 12 des Metallbandes 1 von der auslaufseitigen Solldicke d2* an. Der Filterblock 23 ermittelt durch eine Filterung der im jeweils zugeführten vorläufigen Dickenabweichungen 5d2' die endgültige Dickenabweichung $\delta d2$. Die Filterung ist in aller Regel eine Tiefpassfilterung, mittels derer hochfrequente Schwankungen ausgefiltert werden. Der Filterblock 23 implementiert zur Realisierung seiner Filterung zusätzlich auch ein Transportmodell, welches den Transport der Abschnitte 12 vom Walzgerüst 2 zum Ort der Erfassungseinrichtung 7 und, soweit erforderlich, darüber hinaus modelliert.

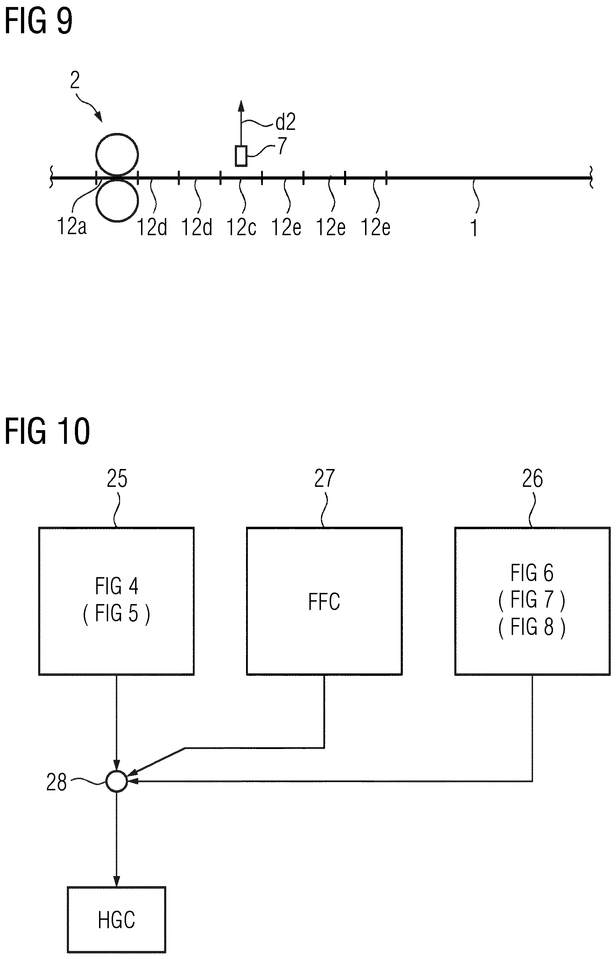

In einer bevorzugten Ausgestaltung ist die Filterung entsprechend der Darstellung in FIG 9 eine Nullphasenfilterung. Dies ist aus FIG 9 dadurch ersichtlich, dass dort die Abschnitte 12 des Metallbandes markiert sind, deren vorläufige Dickenabweichungen 5d2' in die Ermittlung der endgültigen Dickenabweichung $\delta d2$ eingehen. Ersichtlich gehen in die Ermittlung einerseits die vorläufigen Dickenabweichungen 5d2' von Abschnitten 12d ein. Diese Abschnitte 12d sind zwar bereits gewalzt, wurden aber nach dem Abschnitt 12c gewalzt, auf den die endgültige Dickenabweichung $\delta d2$ bezogen ist. Der Abschnitt 12a kann einer der Abschnitte 12d sein. Die Abschnitte 12d befinden sich, wie in FIG 9 dargestellt, in der Regel vor der Messeinrichtung 7, haben die Messeinrichtung 7 also noch nicht passiert. Zum anderen gehen im Rahmen der Nullphasenfilterung in die Ermittlung der endgültigen Dickenabweichung $\delta d2$ in der Regel vorläufige Dickenabweichungen 5d2' ein, die auf Abschnitte 12e des Metallbandes 1 bezogen sind. Diese Abschnitte 12e sind nicht nur bereits gewalzt, sondern wurden sogar vor dem Abschnitt 12c gewalzt, auf den die endgültige Dickenabweichung $\delta d2$ bezogen ist. Die Abschnitte 12e befinden sich daher in der Regel hinter der Messeinrichtung 7, haben die Messeinrichtung 7 also bereits passiert. Schließlich geht in die Ermittlung der endgültigen Dickenabweichung $\delta d2$ auch die vorläufige Dickenabweichung 5d2' des Abschnitts 12c ein, dessen auslaufseitige Dicke d2 im jeweiligen Zyklus gerade mittels der Messeinrichtung 7 erfasst wird.

Für die vorläufigen Dickenabweichungen 5d2' der Abschnitte 12d liegt noch kein Messwert für die auslaufseitige Dicke d2 vor. Bei diesen Dickenabweichungen 5d2' ist es daher erforderlich, dass die Steuereinrichtung 9 mittels des Rechenblocks 22 die entsprechenden vorläufigen Dickenabweichungen 5d2' anhand der Massenflussgleichung ermittelt. In die Ermittlung der jeweiligen vorläufigen Dickenabweichung 5d2' geht somit eine jeweils korrespondierende endgültige einlaufseitige Dicke d1' des entsprechenden Abschnitts 12d ein. Weiterhin gehen in die Ermittlung der jeweiligen vorläufigen Dickenabweichung 5d2' die für den jeweiligen Abschnitt 12d gültige Einlaufgeschwindigkeit v1 und die für den jeweiligen Abschnitt 12d gültige Auslaufgeschwindigkeit v2 ein. Die entsprechenden Geschwindigkeiten v1, v2 können der Steuereinrichtung 9 ohne weiteres bekannt sein, da die Abschnitte 12d bereits gewalzt sind.

Es ist möglich, dass die entsprechenden endgültigen einlaufseitigen Dicken d1' direkt mit den für die Abschnitte 12d erfassten Dicken d1 korrespondieren. Ebenso ist es möglich, dass die Steuereinrichtung 9 - jeweils für den jeweiligen Abschnitt 12d - die jeweilige endgültige einlaufseitige Dicke d1' durch eine Filterung mehrerer einlaufseitig des Walzgerüsts 2 erfasster Dicken d1 ermittelt. Die Ermittlungen können auf die gleiche Art und Weise erfolgen, wie dies obenstehend für die Massenflussregelung (MFC) erläutert wurde.

Für die vorläufigen Dickenabweichungen 5d2' der Abschnitte 12e kann prinzipiell dieselbe Vorgehensweise ergriffen werden. In diesem Fall kann der Rechenblock 24 entfallen. Für die vorläufigen Dickenabweichungen 5d2' der Abschnitte 12e liegt jedoch bereits ein Messwert für die auslaufseitige Dicke d2 vor. Bei diesen vorläufigen Dickenabweichungen 5d2' ist es daher möglich, dass die Steuereinrichtung 9 für die Ermittlung der entsprechenden vorläufigen Dickenabweichungen $\delta$d2' den jeweils erfassten Messwert verwertet. Insbesondere muss im gleichen Block 24 lediglich die Differenz des jeweiligen Messwerts d2 und der auslaufseitigen Solldicke d2* gebildet werden.

Der Abschnitt 12c kann, soweit es die Ermittlung von dessen vorläufiger Dickenabweichung $\delta$d2 betrifft, nach Bedarf wie einer der Abschnitte 12d oder wie einer der Abschnitte 12e behandelt werden, wobei letzteres bevorzugt ist.

FIG 10 zeigt - wieder nur für die Anstellung des Walzgerüsts 2 - eine Gesamtstruktur der Steuereinrichtung 9. Gemäß FIG 10 umfasst die Steuereinrichtung drei Hauptblöcke 25 bis 27. Der Hauptblock 25 implementiert eine FBC. Die FBC kann insbesondere so ausgebildet sein, wie dies obenstehend in Verbindung mit den FIG 7 bis 9 erläutert wurde, also eine dieser Ausgestaltungen realisieren. Der Hauptblock 26 implementiert eine MFC. Die MFC kann insbesondere so ausgebildet sein, wie dies obenstehend in Verbindung mit den FIG 5 und 6 erläutert wurde, also eine dieser Ausgestaltungen realisieren. Der Hauptblock 27 implementiert eine FFC (= feed forward control, Vorsteuerung). Die FFC kompensiert einlaufseitige Dickenfehler. Sie kann insbesondere so ausgebildet sein, wie dies in der bereits genannten älteren europäischen Patentanmeldung 20184420.6 der Primetals Technologies Germany GmbH erläutert ist. Es sind aber auch andere Ausgestaltungen der FFC möglich.

Jeder der Hauptblöcke 25 bis 27 ermittelt einen jeweiligen Sollwert. In der Regel handelt es sich um einen jeweiligen Zusatzsollwert. Die Zusatzsollwerte können in einem entsprechenden Knotenpunkt 28 miteinander und - soweit erforderlich - mit einem Basissollwert addiert werden. Das Ausgangssignal des Knotenpunkts 28 dient als Eingangssignal für die Anstellungseinrichtung 13 bzw. deren Regelung (HGC).

Wie bereits erwähnt, ermittelt die Steuereinrichtung 9 erfindungsgemäß mehrere Sollwerte s*, M2*, vU*, v3*, M3*, v4*, M4* für mehrere Stellglieder 13, 14, 3, 4. Hierbei kann es erforderlich sein, einzelne Sollwerte s*, M2*, vU*, v3*, M3*, v4*, M4* zeitlich zu verzögern, um eine synchrone Reaktion der verschiedenen Stellglieder 13, 14, 3, 4 zu gewährleisten. Dies ist Fachleuten bekannt und vertraut und ohne weiteres zu implementieren. Es muss daher nicht im Detail erläutert werden.

Die vorliegende Erfindung weist viele Vorteile auf. Insbesondere ergibt sich auf einfache Weise eine nahezu vollständige Korrektur sowohl von einlaufseitigen Dickenabweichungen als auch von auslaufseitigen Dickenabweichungen $\delta$d2. Dies gilt ganz besonders, wenn nicht nur eine MFC und/oder eine FBC auf erfindungsgemäße Art und Weise realisiert sind, sondern sowohl eine MFC als auch eine FBC auf erfindungsgemäße Art und Weise realisiert sind und weiterhin zusätzlich auch eine FFC so realisiert ist, wie dies in der europäischen Patentanmeldung 20184420.6 erläutert ist. Weiterhin kann die Inbetriebnahme beschleunigt werden.

Es ist weiterhin ohne weiteres möglich, bestehende Walzanlagen erfindungsgemäß nachzurüsten. Denn die Hardware als solche, d.h. das Walzgerüst 2, die Zuführeinrichtung 3, die Abführeinrichtung 4, die Messeinrichtungen 5 bis 8 und die Steuereinrichtung 9 müssen nicht verändert werden. Lediglich das Steuerprogramm 10 für die Steuereinrichtung 9 muss geändert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den durch die Ansprüche definierten Schutzumfang der Erfindung zu verlassen.

Bezugszeichenliste

| | |
|---|---|
| 1 | Metallband |
| 2 | Walzgerüst |
| 3 | Zuführeinrichtung, Stellglied |
| 4 | Abführeinrichtung, Stellglied |
| 5 bis 8 | Messeinrichtungen |
| 9 | Steuereinrichtung |
| 10 | Steuerprogramm |
| 11 | Maschinencode |

| | |
|---|---|
| 12 | Abschnitte des Metallbandes |
| 13 | Anstellungseinrichtung, Stellglied |
| 14 | Antrieb, Stellglied |
| 15 | Reglerblock |
| 16 | Modifikationsblock/inverses Modell |
| 17, 18 | Ermittlungsblöcke |
| 19 | Transportmodell |
| 20, 21, 22, 24 | Rechenblöcke |
| 21, 23 | Filterblöcke |
| 25 bis 27 | Hauptblöcke |
| 28 | Knotenpunkt |
| d1, d2 | erfasste Dickenwerte |
| d1', d2' | endgültige Dickenwerte |
| S1 bis S4 | Schritte |
| M2*, M3*, M4*, vU*, v3*, v4*, s* | Sollwerte |
| s'* | vorläufiger Sollwert |
| v1 bis v4, vU | Geschwindigkeiten |
| Z | interner Zustand |

$\delta d2$, $\delta d2'$   Dickenabweichungen

**Patentansprüche**

1. Betriebsverfahren für eine Walzanlage,

   - wobei eine einem Walzgerüst (2) der Walzanlage vorgeordnete Zuführeinrichtung (3) dem Walzgerüst (2) ein Metallband (1) zuführt,
   - wobei das Walzgerüst (2) das Metallband (1) walzt,
   - wobei eine dem Walzgerüst (2) nachgeordnete Abführeinrichtung (4) das Metallband (1) abführt,
   - wobei eine Steuereinrichtung (9) der Walzanlage zyklisch jeweils anhand einer Anzahl von endgültigen Dickenabweichungen ($\delta d2$) einer korrespondierenden Anzahl von Abschnitten (12) des Metallbandes (1) von einer auslaufseitigen Solldicke (d2*) des Metallbandes (1) jeweils eine Anzahl von Sollwerten (M2*, M3*, M4*, vU*, v3*, v4*, s*) für eine korrespondierende Anzahl an Stellgliedern (3, 4, 13, 14) ermittelt und die ermittelten Sollwerte (M2*, M3*, M4*, vU*, v3*, v4*, s*) an die Stellglieder (3, 4, 13, 14) ausgibt,
   - wobei die Stellglieder (3, 4, 13, 14) eine Anstellungseinrichtung (13) des Walzgerüsts (2) zum Einstellen eines Walzspaltes des Walzgerüsts (2) und einen Antrieb (14) des Walzgerüsts (2) zum Antreiben von Walzen des Walzgerüsts (2) und weiterhin entweder die Zuführeinrichtung (3) oder die Abführeinrichtung (4) umfassen,
   - wobei der Sollwert (v3*, M3*) für die Zuführeinrichtung (3) eine Sollgeschwindigkeit (v3*) oder ein Sollmoment (M3*) ist, der Sollwert (s*) für die Anstellungseinrichtung (13) ein Walzspaltsollwert (s*) ist, der Sollwert (M2*, vU*) für den Antrieb (14) eine Walzenumfangsgeschwindigkeit (vU*) oder ein Walzmoment (M2*) ist und der Sollwert (v4*, M4*) für die Abführeinrichtung (4) eine Sollgeschwindigkeit (v4*) oder ein Sollmoment (M4*) ist,

   **dadurch gekennzeichnet,**
   **dass** die Steuereinrichtung (9) die Sollwerte (M2*, M3*, M4*, vU*, v3*, v4*, s*) anhand der Anzahl von endgültigen Dickenabweichungen ($\delta d2$) unter Berücksichtigung einer Beschreibung des inversen Frequenzverhaltens des jeweiligen Stellgliedes (3, 4, 13, 14) ermittelt.

2. Betriebsverfahren nach Anspruch 1,
   **dadurch gekennzeichnet,**
   **dass** die Anzahl von endgültigen Dickenabweichungen ($\delta d2$) des jeweiligen Zyklus gleich 1 ist, dass die Steuereinrichtung (9) die endgültige Dickenabweichung ($\delta d2$) anhand einer endgültigen einlaufseitigen Dicke (d1') des Abschnitts (12) des Metallbandes (1) unter Berücksichtigung einer Einlaufgeschwindigkeit (v1), mit welcher der Abschnitt (12) des Metallbandes (1) in das Walzgerüst (2) einläuft, und einer Auslaufgeschwindigkeit (v2), mit welcher der Abschnitt (12) des Metallbandes (1) aus dem Walzgerüst (2) ausläuft, anhand der Massenflussgleichung ermittelt und dass der Abschnitt (12) des Metallbandes (1), auf den die ermittelte endgültige Dickenabweichung ($\delta d2$) bezogen ist, der momentan gewalzte Abschnitt (12a) des Metallbandes (1) ist.

3. Betriebsverfahren nach Anspruch 2,

**dadurch gekennzeichnet ,**
**dass** die endgültige einlaufseitige Dicke (d1') des Abschnitts (12) des Metallbandes (1) eine vor dem jeweiligen Zyklus für den momentan gewalzten Abschnitt (12a) des Metallbandes (1) einlaufseitig des Walzgerüsts (2) erfasste Dicke (d1) des Abschnitts (12) des Metallbandes (1) ist oder dass die Steuereinrichtung (9) die endgültige einlaufseitige Dicke (d1') des Abschnitts (12) des Metallbandes (1) durch eine Filterung von für eine Mehrzahl von Abschnitten (12) des Metallbandes (1) einlaufseitig des Walzgerüsts (2) erfassten Dicken (d1) ermittelt.

4.  Betriebsverfahren nach Anspruch 1,
    **dadurch gekennzeichnet ,**
    **dass** die Anzahl von endgültigen Dickenabweichungen ($\delta$d2) des jeweiligen Zyklus gleich 1 ist und dass die endgültige Dickenabweichung ($\delta$d2) auf einen vor dem momentan gewalzten Abschnitt (12a) des Metallbandes (1) gewalzten Abschnitt (12c) des Metallbandes (1) bezogen ist.

5.  Betriebsverfahren nach Anspruch 4,
    **dadurch gekennzeichnet ,**
    **dass** eine zwischen dem Walzgerüst (2) und der Abführeinrichtung (4) angeordnete Messeinrichtung (7) die auslaufseitige Dicke (d2) des Abschnitts (12c) des Metallbandes (1) erfasst und der Steuereinrichtung (9) zuführt und dass die endgültige Dickenabweichung ($\delta$d2) anhand der erfassten auslaufseitigen Dicke (d2) und der auslaufseitigen Solldicke (d2*) ermittelt wird.

6.  Betriebsverfahren nach Anspruch 4,
    **dadurch gekennzeichnet ,**
    **dass** die Steuereinrichtung (9) die endgültige Dickenabweichung ($\delta$d2) durch eine Filterung einer Mehrzahl von vorläufigen Dickenabweichungen ($\delta$d2') einer korrespondierenden Anzahl von Abschnitten (12) des Metallbandes (1) von der auslaufseitigen Solldicke (d2*) ermittelt.

7.  Betriebsverfahren nach Anspruch 6,
    **dadurch gekennzeichnet ,**
    **dass** die Filterung eine Nullphasenfilterung ist, dass ein erster Teil der vorläufigen Dickenabweichungen ($\delta$d2') auf Abschnitte (12d) des Metallbandes (1) bezogen ist, die zwar bereits gewalzt sind, aber nach dem Abschnitt (12c) des Metallbandes (1) gewalzt wurden, auf den die endgültige Dickenabweichung ($\delta$d2) bezogen ist, und dass die Steuereinrichtung (9) diese vorläufigen Dickenabweichungen ($\delta$d2') anhand einer jeweiligen korrespondierenden endgültigen einlaufseitigen Dicke (d1') des Metallbandes (1) unter Berücksichtigung einer Einlaufgeschwindigkeit (v1), mit der der jeweilige Abschnitt (12) des Metallbandes (1) in das Walzgerüst (2) einläuft, und einer Auslaufgeschwindigkeit (v2), mit der der jeweilige Abschnitt (12) des Metallbandes (1) aus dem Walzgerüst (2) ausläuft, anhand der Massenflussgleichung ermittelt.

8.  Betriebsverfahren nach Anspruch 7,
    **dadurch gekennzeichnet ,**
    **dass** für den ersten Teil der vorläufigen Dickenabweichungen ($\delta$d2) die jeweilige endgültige einlaufseitige Dicke (d1') des Abschnitts (12) des Metallbandes (1) eine für den jeweiligen Abschnitt (12) des Metallbandes (1) einlaufseitig des Walzgerüsts (2) erfasste Dicke (d1) des jeweiligen Abschnitts (12) des Metallbandes (1) ist oder dass die Steuereinrichtung (9) die jeweilige endgültige einlaufseitige Dicke (d1') des jeweiligen Abschnitts (12) des Metallbandes (1) durch eine Filterung von für eine Mehrzahl von jeweiligen Abschnitten (12) des Metallbandes (1) einlaufseitig des Walzgerüsts (2) erfassten Dicken (d1) ermittelt.

9.  Betriebsverfahren nach Anspruch 7 oder 8,
    **dadurch gekennzeichnet ,**
    **dass** eine zwischen dem Walzgerüst (2) und der Abführeinrichtung (4) angeordnete Messeinrichtung (7) für Abschnitte (12) des Metallbandes (1) jeweils die auslaufseitige Dicke (d2) erfasst und der Steuereinrichtung (9) zuführt, dass ein zweiter Teil der vorläufigen Dickenabweichungen ($\delta$d2') auf Abschnitte (12) des Metallbandes (1) bezogen ist, die vor dem Abschnitt (12c) des Metallbandes (1) gewalzt wurden, auf den die endgültige Dickenabweichung ($\delta$d2) bezogen ist, und dass die Steuereinrichtung (9) für den zweiten Teil der vorläufigen Dickenabweichungen ($\delta$d2') die jeweilige vorläufige Dickenabweichung ($\delta$d2') anhand der jeweils erfassten auslaufseitigen Dicke (d2) und der auslaufseitigen Solldicke (d2*) ermittelt.

10. Betriebsverfahren nach einem der obigen Ansprüche,
    **dadurch gekennzeichnet ,**

- **dass** die Beschreibung des inversen Frequenzverhaltens des jeweiligen Stellgliedes (3, 4, 13, 14) der Steuereinrichtung (9) durch ein jeweiliges inverses Modell (16) vorgegeben ist,
- **dass** die Steuereinrichtung (9) dem jeweiligen inversen Modell (16) die endgültige Dickenabweichung ($\delta d2$) eines Abschnitts (12) des Metallbandes (1) zuführt und
- **dass** die Steuereinrichtung (9) unter Verwertung der zugeführten endgültigen Dickenabweichung ($\delta d2$) mittels des jeweiligen inversen Modells (16) zum einen einen jeweiligen internen Zustand (Z) des jeweiligen inversen Modells (16) nachführt und zum anderen den jeweiligen Sollwert (M2*, M3*, M4*, vU*, v3*, v4*, s*) ermittelt.

11. Steuerprogramm, das Maschinencode (11) umfasst, der von einer Steuereinrichtung (9) für eine Walzanlage abarbeitbar ist, wobei die Abarbeitung des Maschinencodes (11) durch die Steuereinrichtung (9) bewirkt, dass die Steuereinrichtung (9) die Walzanlage gemäß einem Betriebsverfahren nach einem der obigen Ansprüche betreibt.

12. Steuereinrichtung für eine Walzanlage, wobei die Steuereinrichtung mit einem Steuerprogramm (10) nach Anspruch 11 programmiert ist, so dass die Steuereinrichtung die Walzanlage gemäß einem Betriebsverfahren nach einem der Ansprüche 1 bis 10 betreibt.

13. Walzanlage zum Walzen eines Metallbandes (1),

- wobei die Walzanlage zumindest ein Walzgerüst (2), eine dem Walzgerüst (2) vorgeordnete Zuführeinrichtung (3), eine dem Walzgerüst (2) nachgeordnete Abführeinrichtung (4) und eine Steuereinrichtung (9) aufweist,
- wobei die Zuführeinrichtung (3) dem Walzgerüst (2) das Metallband (1) zuführt,
- wobei das Walzgerüst (2) das Metallband (1) walzt,
- wobei die Abführeinrichtung (4) das Metallband (1) vom Walzgerüst (2) abführt,
- wobei die Steuereinrichtung (9) die Walzanlage gemäß einem Betriebsverfahren nach einem der Ansprüche 1 bis 10 betreibt.

**Claims**

1. Operating method for a rolling mill,

- wherein a feeding device (3) arranged upstream of a rolling stand (2) of the rolling mill feeds a metal strip (1) to the rolling stand (2),
- wherein the rolling stand (2) rolls the metal strip (1),
- wherein a removing device (4) arranged downstream of the rolling stand (2) removes the metal strip (1),
- wherein a control device (9) of the rolling mill cyclically determines in each case on the basis of a number of final thickness deviations ($\delta d2$) of a corresponding number of portions (12) of the metal strip (1) from a setpoint thickness (d2*) of the metal strip (1) on the exit side in each case a number of setpoint values (M2*, M3*, M4*, vU*, v3*, v4*, s*) for a corresponding number of final control elements (3, 4, 13, 14) and outputs the determined setpoint values (M2*, M3*, M4*, vU*, v3*, v4*, s*) to the final control elements (3, 4, 13, 14),
- wherein the final control elements (3, 4, 13, 14) comprise an adjusting device (13) of the rolling stand (2) for setting a rolling gap of the rolling stand (2), and a drive (14) of the rolling stand (2) for driving rolls of the rolling stand (2), and furthermore either the feeding device (3) or the removing device (4),
- wherein the setpoint value (v3*, M3*) for the feeding device (3) is a setpoint speed (v3*) or a setpoint torque (M3*), the setpoint value (s*) for the adjusting device (13) is a setpoint rolling-gap value (s*), the setpoint value (M2*, vU*) for the drive (14) is a roll circumferential speed (vU*) or a rolling torque (M2*) and the setpoint value (v4*, M4*) for the removing device (4) is a setpoint speed (v4*) or a setpoint torque (M4*), **characterized**

**in that** the control device (9) determines the setpoint values (M2*, M3*, M4*, vU*, v3*, v4*, s*) on the basis of the number of final thickness deviations ($\delta d2$) with allowance for a description of the inverse frequency response of the respective final control element (3, 4, 13, 14).

2. Operating method according to Claim 1,
   **characterized**
   **in that** the number of final thickness deviations ($\delta d2$) of the respective cycle is equal to 1, in that the control device (9) determines the final thickness deviation ($\delta d2$) on the basis of a final entry-side thickness (d1') of the portion (12) of the metal strip (1) with allowance for an entry speed (v1), at which the portion (12) of the metal strip (1) enters the rolling stand (2), and an exit speed (v2), at which the portion (12) of the metal strip (1) exits the rolling stand (2), on the basis of the mass flow equation and in that the portion (12) of the metal strip (1) to which the determined final thickness deviation ($\delta$d2) relates is the portion (12a) of the metal strip (1) that is being rolled at that moment.

3. Operating method according to Claim 2,
**characterized**
**in that** the final entry-side thickness (d1') of the portion (12) of the metal strip (1) is a thickness (d1) of the portion (12) of the metal strip (1) that is detected on the entry side of the rolling stand (2) before the respective cycle for the portion (12a) of the metal strip (1) being rolled at that moment or in that the control device (9) determines the final entry-side thickness (d1') of the portion (12) of the metal strip (1) by a filtering of thicknesses (d1) detected on the entry side of the rolling stand (2) for a plurality of portions (12) of the metal strip (1).

4. Operating method according to Claim 1,
**characterized**
**in that** the number of final thickness deviations ($\delta$d2) of the respective cycle is equal to 1 and in that the final thickness deviation ($\delta$d2) relates to a portion (12c) of the metal strip (1) rolled before the portion (12a) of the metal strip (1) being rolled at that moment.

5. Operating method according to Claim 4,
**characterized**
**in that** a measuring device (7), arranged between the rolling stand (2) and the removing device (4), detects the exit-side thickness (d2) of the portion (12c) of the metal strip (1) and feeds it to the control device (9) and in that the final thickness deviation ($\delta$d2) is determined on the basis of the detected exit-side thickness (d2) and the exit-side setpoint thickness (d2*).

6. Operating method according to Claim 4,
**characterized**
**in that** the control device (9) determines the final thickness deviation ($\delta$d2) by a filtering of a plurality of provisional thickness deviations ($\delta$d2') of a corresponding number of portions (12) of the metal strip (1) from the exit-side setpoint thickness (d2*).

7. Operating method according to Claim 6,
**characterized**
**in that** the filtering is a zero-phase filtering, in that a first part of the provisional thickness deviations ($\delta$d2') relates to portions (12d) of the metal strip (1) which, although already rolled, were rolled after the portion (12c) of the metal strip (1) to which the final thickness deviation ($\delta$d2) relates, and in that the control device (9) determines these provisional thickness deviations ($\delta$d2') on the basis of a respective corresponding final entry-side thickness (d1') of the metal strip (1) with allowance for an entry speed (v1), at which the respective portion (12) of the metal strip (1) enters the rolling stand (2), and an exit speed (v2), at which the respective portion (12) of the metal strip (1) exits the rolling stand (2), on the basis of the mass flow equation.

8. Operating method according to Claim 7,
**characterized**
**in that**, for the first part of the provisional thickness deviations ($\delta$d2), the respective final entry-side thickness (d1') of the portion (12) of the metal strip (1) is a thickness (d1) of the respective portion (12) of the metal strip (1) that is detected on the entry side of the rolling stand (2) for the respective portion (12) of the metal strip (1) or in that the control device (9) determines the respective final entry-side thickness (d1') of the respective portion (12) of the metal strip (1) by a filtering of thicknesses (d1) detected on the entry side of the rolling stand (2) for a plurality of respective portions (12) of the metal strip (1).

9. Operating method according to Claim 7 or 8,
**characterized**
**in that** a measuring device (7), arranged between the rolling stand (2) and the removing device (4), detects the exit-side thickness (d2) in each case for portions (12) of the metal strip (1) and feeds it to the control device (9), in that a second part of the provisional thickness deviations ($\delta$d2') relates to portions (12) of the metal strip (1) that were rolled before the portion (12c) of the metal strip (1) to which the final thickness deviation ($\delta$d2) relates, and in that, for the second part of the provisional thickness deviations ($\delta$d2'), the control device (9) determines the respective provisional thickness deviation ($\delta$d2') on the basis of the respectively detected exit-side thickness (d2) and the exit-side setpoint thickness (d2*).

10. Operating method according to one of the above claims,
**characterized**

- **in that** the description of the inverse frequency response of the respective final control element (3, 4, 13, 14) of the control device (9) is specified by a respective inverse model (16),
- **in that** the control device (9) feeds the final thickness deviation ($\delta$d2) of a portion (12) of the metal strip (1) to the respective inverse model (16) and
- **in that** the control device (9) using the fed final thickness deviation ($\delta$d2) by means of the respective inverse model (16) on the one hand correctively adjusts a respective internal state (Z) of the respective inverse model (16) and on the other hand determines the respective setpoint value (M2*, M3*, M4*, vU*, v3*, v4*, s*).

11. Control program which comprises machine code (11) that can be executed by a control device (9) for a rolling mill, wherein the execution of the machine code (11) by the control device (9) brings about the effect that the control device (9) operates the rolling mill according to an operating method according to one of the above claims.

12. Control device for a rolling mill, wherein the control device is programmed with a control program (10) according to Claim 11, so that the control device operates the rolling mill according to an operating method according to one of Claims 1 to 10.

13. Rolling mill for rolling a metal strip (1),

- wherein the rolling mill has at least one rolling stand (2), a feeding device (3) arranged upstream of the rolling stand (2), a removing device (4) arranged downstream of the rolling stand (2) and a control device (9),
- wherein the feeding device (3) feeds the metal strip (1) to the rolling stand (2),
- wherein the rolling stand (2) rolls the metal strip (1),
- wherein the removing device (4) removes the metal strip (1) from the rolling stand (2),
- wherein the control device (9) operates the rolling mill according to an operating method according to one of Claims 1 to 10.

## Revendications

1. Procédé de fonctionnement pour un laminoir,

- dans lequel un dispositif d'alimentation (3) placé en amont d'une cage de laminoir (2) du laminoir alimente une bande métallique (1) vers la cage de laminoir (2),
- dans lequel la cage de laminoir (2) lamine la bande métallique (1),
- dans lequel un dispositif d'évacuation (4) disposé en aval de la cage de laminoir (2) évacue la bande métallique (1),
- dans lequel un dispositif de commande (9) du laminoir détermine de manière cyclique, respectivement à partir d'un nombre de différences d'épaisseur finales (5d2) d'un nombre correspondant de tronçons (12) de la bande métallique (1), un nombre de valeurs de consigne (M2*, M3*, M4*, vU*, v3*, v4*, s*) pour un nombre correspondant d'actionneurs (3, 4, 13, 14) à partir d'une épaisseur de consigne (d2*) côté sortie de la bande métallique (1), et délivre en sortie les valeurs de consigne déterminées (M2*, M3*, M4*, vU*, v3*, v4*, s*) aux actionneurs (3, 4, 13, 14),
- dans lequel les actionneurs (3, 4, 13, 14) comprennent un dispositif d'ajustement (13) de la cage de laminoir (2) pour le réglage d'un interstice de la cage de laminoir (2) et un entraînement (14) de la cage de laminoir (2) pour l'entraînement de cylindres de la cage de laminoir (2) et en outre le dispositif d'alimentation (3) ou le dispositif d'évacuation (4),
- dans lequel la valeur de consigne (v3*, M3*) pour le dispositif d'alimentation (3) est une vitesse de consigne (v3*) ou un couple de consigne (M3*), la valeur de consigne (s*) pour le dispositif d'ajustement (13) est une valeur de consigne d'interstice (s*), la valeur de consigne (M2*, vU*) pour l'entraînement (14) est une vitesse périphérique de laminage (vU*) ou un couple de laminage (M2*) et la valeur de consigne (v4*, M4*) pour le dispositif d'évacuation (4) est une vitesse de consigne (v4*) ou un couple de consigne (M4*),

**caractérisé en ce que**,

le dispositif de commande (9) détermine les valeurs de consigne (M2*, M3*, M4*, vU*, v3*, v4*, s*) en fonction du nombre de différences d'épaisseur finales (5d2) en prenant en compte une description du comportement en fréquence inverse des actionneurs respectifs (3, 4, 13, 14).

2. Procédé de fonctionnement selon la revendication 1, **caractérisé en ce que**, le nombre de différences d'épaisseur finales ($\delta$d2) du cycle respectif est égal à 1, le dispositif de commande (9) détermine la différence d'épaisseur finale ($\delta$d2) en fonction d'une épaisseur finale côté entrée (d1') du tronçon (12) de la bande métallique (1) en prenant en compte une vitesse d'entrée (v1) à laquelle le tronçon (12) de la bande métallique (1) entre dans la cage de laminoir (2) et une vitesse de sortie (v2) à laquelle le tronçon (12) de la bande métallique (1) sort de la cage de laminoir (2) à l'aide de l'équation de débit massique, et **en ce que** le tronçon (12) de la bande métallique (1) auquel la différence d'épaisseur finale déterminée ($\delta$d2) est rapportée est le tronçon momentanément laminé (12a) de la bande métallique (1).

3. Procédé de fonctionnement selon la revendication 2, **caractérisé en ce que**, l'épaisseur finale côté entrée (d1') du tronçon (12) de la bande métallique (1) est une épaisseur (d1) du tronçon (12) de la bande métallique (1) détectée côté entrée de la cage de laminoir (2) avant le cycle respectif pour le tronçon (12a) actuellement laminé de la bande métallique (1), ou **en ce que** le dispositif de commande (9) détermine l'épaisseur finale côté entrée (d1') du tronçon (12) de la bande métallique (1) par un filtrage des épaisseurs (d1) détectées côté entrée de la cage de laminoir (2) pour une pluralité de tronçons (12) de la bande métallique (1).

4. Procédé de fonctionnement selon la revendication 1, **caractérisé en ce que**, le nombre de différences d'épaisseur finales ($\delta$d2) du cycle respectif est égal à 1 et **en ce que** la différence d'épaisseur finale ($\delta$d2) est rapportée à un tronçon (12c) de la bande métallique (1) laminé en amont du tronçon (12a) momentanément laminé de la bande métallique (1).

5. Procédé de fonctionnement selon la revendication 4, **caractérisé en ce que**, un dispositif de mesure (7) agencé entre la cage de laminoir (2) et le dispositif d'évacuation (4) détecte l'épaisseur côté sortie (d2) du tronçon (12c) de la bande métallique (1) et l'alimente vers le dispositif de commande (9) et **en ce que** la différence d'épaisseur finale ($\delta$d2) est déterminé en fonction de l'épaisseur côté sortie détectée (d2) et de l'épaisseur de consigne côté sortie (d2*).

6. Procédé de fonctionnement selon la revendication 4, **caractérisé en ce que**, le dispositif de commande (9) détermine la différence d'épaisseur finale (5d2) en filtrant une pluralité de différences d'épaisseur provisoires ($\delta$d2') d'un nombre correspondant de tronçons (12) de la bande métallique (1) par rapport à l'épaisseur de consigne côté sortie (d2*).

7. Procédé de fonctionnement selon la revendication 6, **caractérisé en ce que**, le filtrage est un filtrage en phase zéro, **en ce qu'**une première partie des différences d'épaisseur provisoires ($\delta$d2') est rapportée à des tronçons (12d) de la bande métallique (1) qui sont certes déjà laminés, mais qui ont été laminées après le tronçon (12c) de la bande métallique (1) auquel la différence d'épaisseur finale (5d2) est rapportée, et **en ce que** le dispositif de commande (9) détermine ces différences d'épaisseur provisoires (5d2') en fonction d'une épaisseur correspondante finale côté entrée (d1') de la bande métallique (1) en tenant compte d'une vitesse d'entrée (v1) à laquelle le tronçon respectif (12) de la bande métallique (1) entre dans la cage de laminoir (2) et d'une vitesse de sortie (v2) à laquelle le tronçon respectif (12) de la bande métallique (1) sort de la cage de laminoir (2) en fonction de l'équation de flux massique.

8. Procédé de fonctionnement selon la revendication 7, **caractérisé en ce que**, pour la première partie des différences d'épaisseur provisoires ($\delta$d2), l'épaisseur finale respective côté entrée (d1') du tronçon (12) de la bande métallique (1) est une épaisseur (d1) du tronçon respectif (12) de la bande métallique (1) détectée côté entrée de la cage de laminoir (2) ou **en ce que** le dispositif de commande (9) détermine l'épaisseur finale respective côté entrée (d1') du tronçon respectif (12) de la bande métallique (1) par un filtrage des épaisseurs (d1) détectées côté entrée de la cage de laminoir (2) pour une pluralité de tronçons respectifs (12) de la bande métallique (1).

9. Procédé de fonctionnement selon la revendication 7 ou 8,
**caractérisé en ce que**,
un dispositif de mesure (7) agencé entre la cage de laminoir (2) et le dispositif d'évacuation (4) pour des tronçons (12) de la bande métallique (1) détecte respectivement l'épaisseur côté sortie (d2) et l'alimente vers le dispositif de commande (9), **en ce qu'**une deuxième partie des différences d'épaisseur provisoires (5d2') est rapportée à des tronçons (12) de la bande métallique (1) qui ont été laminés avant le tronçon (12c) de la bande métallique (1) auquel la différence d'épaisseur définitive ($\delta$d2) est rapportée, et **en ce que** le dispositif de commande (9) détermine pour la deuxième partie des différences d'épaisseur provisoires ($\delta$d2') la différence d'épaisseur provisoire respective ($\delta$d2') en fonction respectivement de l'épaisseur côté sortie détectée (d2) et de l'épaisseur de consigne côté sortie (d2*).

10. Procédé de fonctionnement selon l'une quelconque des revendications précédentes,
**caractérisé en ce que**,

- la description du comportement en fréquence inverse des actionneurs respectifs (3, 4, 13, 14) du dispositif de commande (9) est prédéfinie par un modèle inverse respectif (16),
- le dispositif de commande (9) alimente vers le modèle inverse respectif (16) la différence d'épaisseur finale ($\delta$d2) d'un tronçon (12) de la bande métallique (1), et
- le dispositif de commande (9), en utilisant la différence d'épaisseur finale alimentée ($\delta$d2), suit au moyen du modèle inverse respectif (16), d'une part, un état interne respectif (Z) du modèle inverse respectif (16) et, d'autre part, détermine la valeur de consigne respective (M2*, M3*, M4*, vU*, v3*, v4*, s*).

11. Programme de commande comprenant un code de machine (11) pouvant être traité par un dispositif de commande (9) pour un laminoir, dans lequel le traitement du code de machine (11) par le dispositif de commande (9) amène le dispositif de commande (9) à faire fonctionner le laminoir selon un procédé de fonctionnement selon l'une quelconque des revendications précédentes.

12. Dispositif de commande pour un laminoir, dans lequel le dispositif de commande est programmé avec un programme de commande (10) selon la revendication 11, de sorte que le dispositif de commande fait fonctionner le laminoir selon un procédé de fonctionnement selon l'une quelconque des revendications 1 à 10.

13. Laminoir permettant de laminer une bande métallique (1),

- dans lequel le laminoir présente au moins une cage de laminoir (2), un dispositif d'alimentation (3) agencé en amont de la cage de laminoir (2), un dispositif d'évacuation (4) agencé en aval de la cage de laminoir (2) et un dispositif de commande (9),
- dans lequel le dispositif d'alimentation (3) alimente la bande métallique (1) vers la cage de laminoir (2),
- dans lequel la cage de laminoir (2) lamine la bande métallique (1),
- dans lequel le dispositif d'évacuation (4) évacue la bande métallique (1) à partir de la cage de laminoir (2),
- dans lequel le dispositif de commande (9) fait fonctionner le laminoir selon un procédé de fonctionnement selon l'une quelconque des revendications 1 à 10.

FIG 1

EP 3 974 073 B2

## FIG 2

| d1, d2, v1, v2 | S1 |

| δd2 | S2 |

| s*, M2*, vU*, v3*, M3*, v4*, M4* | S3 |

s* → 13

M2*, vU* → 14

M3*, v3* → 3

M4*, v4* → 4

S4

T

## FIG 3

1

12b    12  12a  12    12c

## FIG 4

$\delta d2$

15

$s'^*$

$Z$

$$G^{-1}(L) = \frac{T' \cdot L + 1}{T'' \cdot L + 1}$$

16

$s^*$

## FIG 5

$d1' = d1$

$v1, v2$

$$\delta d2 = d1' \cdot \frac{v1}{v2} - d2^*$$

17

$d2^*$

$\delta d2$

15

$s'^*$

$Z$

$$G^{-1}(L) = \frac{T' \cdot L + 1}{T'' \cdot L + 1}$$

16

$s^*$

FIG 6

$$\delta d2 = d1' \cdot \frac{v1}{v2} - d2^*$$

$$G^{-1}(L) = \frac{T' \cdot L + 1}{T'' \cdot L + 1}$$

FIG 7

$$\delta d2 = d2' - d2^*$$

$$G^{-1}(L) = \frac{T' \cdot L + 1}{T'' \cdot L + 1}$$

FIG 8

$$\delta d2' = d2 - d2^*$$

$$\delta d2' = d1' \cdot \frac{v1}{v2} - d2^*$$

$$G^{-1}(L) = \frac{T' \cdot L + 1}{T'' \cdot L + 1}$$

FIG 9

2

d2
7

12a    12d  12d  12c  12e  12e  12e      1

FIG 10

25              27              26

| FIG 4<br>( FIG 5 ) | FFC | FIG 6<br>( FIG 7 )<br>( FIG 8 ) |

28

HGC

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0435595 A2
- EP 3332883 A1
- JP 58068414 A
- EP 20184420